(19) **Europäisches Patentamt / European Patent Office / Office européen des brevets**

(11) **EP 4 716 213 A1**

(12) **EUROPEAN PATENT APPLICATION**
published in accordance with Art. 153(4) EPC

(43) Date of publication:
25.03.2026 Bulletin 2026/13

(21) Application number: 23941391.7

(22) Date of filing: 14.12.2023

(51) International Patent Classification (IPC):
*H04N 19/119* (2014.01)    *H04N 19/174* (2014.01)

(52) Cooperative Patent Classification (CPC):
H04N 19/119; H04N 19/174

(86) International application number:
PCT/CN2023/138765

(87) International publication number:
WO 2024/255171 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.06.2023 RU 2023115400

(71) Applicant: Huawei Cloud Computing
Technologies Co., Ltd.
Guiyang, Guizhou, 550025 (CN)

(72) Inventors:
• NATALIA, Domnina
  Guiyang, Guizhou 550025 (CN)
• OLGA, Zueva
  Guiyang, Guizhou 550025 (CN)
• PAVEL, Frolov
  Guiyang, Guizhou 550025 (CN)
• LI, Gang
  Guiyang, Guizhou 550025 (CN)
• DING, Wenpeng
  Guiyang, Guizhou 550025 (CN)

(74) Representative: Gill Jennings & Every LLP
The Broadgate Tower
20 Primrose Street
London EC2A 2ES (GB)

(54) **VIDEO ENCODING METHOD AND APPARATUS**

(57) This application provides a video encoding method and apparatus. The video encoding method includes: obtaining a first slicing solution of a first video frame; determining encoding performance prediction values of N second slices obtained when the first slicing solution is used for a second video frame; determining a second slicing solution of the second video frame based on the encoding performance prediction values of the N second slices; segmenting the second video frame into N third slices according to the second slicing solution; and separately encoding the N third slices. In embodiments of this application, predicted encoding performance of a current video frame, namely, the second video frame, is determined, to determine the second slicing solution that is suitable for the second video frame and in which encoding performance is more balanced, thereby significantly improving encoding performance of the video frame and an entire video.

400

| Obtain a first slicing solution of a first video frame | 410 |

| Determine encoding performance prediction values of N second slices obtained when the first slicing solution is used for a second video frame | 420 |

| Determine a second slicing solution of the second video frame based on the encoding performance prediction values of the N second slices | 430 |

| Segment the second video frame into N third slices according to the second slicing solution, and separately encode the N third slices | 440 |

FIG. 4

EP 4 716 213 A1

## Description

This application claims priority to Russian Patent Application No. RU2023115400, filed with the Federal Service for Intellectual Property on June 13, 2023 and entitled "SLICE BALANCING", which is incorporated herein by reference in its entirety.

## TECHNICAL FIELD

This application relates to the field of video encoding/decoding technologies, and in particular, to a video encoding method and apparatus.

## BACKGROUND

In recent years, cloud multimedia services have been developed rapidly, including live broadcasting, real-time communication (real-time communication, RTC) services, video conferencing, cloud desktops, and the like. In addition, the cloud multimedia services also start to pursue higher experience or a lower delay. As core technologies of media services, video encoding/decoding technologies need to be optimized in terms of an encoding delay, an encoding speed, encoding efficiency, and the like, to build technical competitiveness. Generally, to improve an encoding speed of a video encoder, parallel encoding needs to be performed on each frame of a video. Therefore, slice (slice) segmentation may be first performed on each video frame, and then parallel encoding is performed on a plurality of slices obtained through the segmentation, to improve an encoding speed of each video frame.

In a current video encoding standard, a slicing solution for slice segmentation of the video frame does not consider video content, but performs slice segmentation in an even segmentation manner. In this case, when change degrees of the video content are unbalanced, encoding performance such as encoding delays and encoding speeds of the plurality of slices in the video frame is unbalanced, reducing encoding performance of the video frame or even the entire video.

## SUMMARY

This application provides a video encoding method and apparatus. Predicted encoding performance of a current video frame, namely, a second video frame, is determined, to determine a second slicing solution that is suitable for the second video frame and in which encoding performance is more balanced, thereby significantly improving encoding performance of an entire video frame and even an entire video.

According to a first aspect, a video encoding method is provided. The method includes: obtaining a first slicing solution of a first video frame, where the first slicing solution is used to segment the first video frame into N first slices, and N is a positive integer greater than or equal to 2; determining encoding performance prediction values of N second slices obtained when the first slicing solution is used for a second video frame, where the N second slices are in one-to-one correspondence with the N first slices, a position of each second slice in the second video frame is the same as a position of a corresponding first slice in the first video frame, and an area of each second slice is the same as an area of the corresponding first slice; determining a second slicing solution of the second video frame based on the encoding performance prediction values of the N second slices, where the second slicing solution is used to segment the second video frame into N third slices; segmenting the second video frame into the N third slices according to the second slicing solution; and separately encoding the N third slices to obtain an encoded second video frame.

According to the technical solutions provided in this application, encoding performance of each slice in a current video frame, namely, the second video frame, is predicted according to the first slicing solution of the encoded first video frame, to determine the second slicing solution that is suitable for the second video frame and in which encoding performance is more balanced, thereby significantly improving encoding performance of the entire second video frame and even an entire video.

The second video frame may be a frame next to the first video frame, or may be any frame arranged after the first video frame in a video frame sequence. In other words, the first video frame is any encoded video frame before the second video frame. In embodiments of this application, the second video frame is preferably the frame next to the first video frame. In this way, a process of determining or adjusting a slicing solution is smoother, so that the encoding performance of the entire video can be improved.

With reference to the first aspect, in some implementations of the first aspect, the determining the second slicing solution of the second video frame based on the encoding performance prediction values of the N second slices includes: adjusting an area of a part or all of the N second slices based on the encoding performance prediction values of the N second slices, to obtain the second slicing solution.

According to the technical solutions provided in this application, the second slicing solution corresponding to the second video frame may be different from the first slicing solution of the first video frame, and implement a dynamic slicing process of different video frames. A slicing solution corresponding to each video frame can implement balanced encoding performance of video frame slices, to improve the encoding performance of the entire video.

With reference to the first aspect, in some implementations of the first aspect, the adjusting the area of the part or all of the N second slices includes: determining a fourth slice from the N second slices, where when the encoding performance prediction value is positively correlated with encoding performance, an encoding performance prediction value of the fourth slice is the smallest; or when the encoding performance prediction value is negatively correlated with encoding performance, an encoding performance prediction value of the fourth slice is the largest; and reducing an area of the fourth slice.

According to the technical solutions provided in this application, the area of the fourth slice with worst encoding performance is reduced, to improve the overall encoding performance of the entire video frame.

With reference to the first aspect, in some implementations of the first aspect, the reducing the area of the fourth slice includes: moving a slice boundary between the fourth slice and at least one adjacent second slice by K slice rows toward the fourth slice.

According to the technical solutions provided in this application, the slice boundary between the fourth slice and the adjacent second slice is adjusted, so that the area of the fourth slice can be quickly adjusted, and a process of recalculating an adjusted area is not included. This improves the encoding performance.

With reference to the first aspect, in some implementations of the first aspect, the method further includes: determining a fifth slice from the N second slices, where when the encoding performance prediction value is positively correlated with the encoding performance, an encoding performance prediction value of the fifth slice is the largest; or when the encoding performance prediction value is negatively correlated with the encoding performance, an encoding performance prediction value of the fifth slice is the smallest. The reducing the area of the fourth slice includes: moving one or more slice boundaries between the fourth slice and the fifth slice by K slice rows toward the fourth slice.

According to the technical solutions provided in this application, the slice boundary between the fourth slice and the fifth slice is adjusted, and an area of another second slice remains unchanged, so that while encoding performance of the fourth slice is improved and encoding performance of the fifth slice is reduced, encoding performance of the another second slice can remain basically unchanged. In this way, the N third slices with more balanced encoding performance and the second slicing solution are obtained, and the encoding performance of the second video frame is improved.

With reference to the first aspect, in some implementations of the first aspect, a value of K is 1.

According to the technical solutions provided in this application, when the value of K is 1, an adjustment amplitude of slicing solutions of different video frames in a same sequence may be reduced, to avoid frequent adjustment or an extremely large adjustment amplitude of the slicing solutions.

With reference to the first aspect, in some implementations of the first aspect, a value of K is positively correlated with a difference between a largest value and a smallest value in the encoding performance prediction values of the N second slices.

According to the technical solutions provided in this application, a larger difference between the largest value and the smallest value in the encoding performance prediction values of the N second slices indicates a larger value of K. In this way, an encoding performance difference between two second slices corresponding to the largest value and the smallest value in the encoding performance prediction values can be quickly narrowed.

With reference to the first aspect, in some implementations of the first aspect, before determining the second slicing solution of the second video frame, the method further includes: determining that the difference between the largest value and the smallest value in the encoding performance prediction values of the N second slices reaches a target difference threshold.

According to the technical solutions provided in this application, whether encoding performance of the N second slices is balanced may be determined. When the difference between the largest value and the smallest value in the encoding performance prediction values of the N second slices reaches the target difference threshold, it indicates that the encoding performance of the N second slices is unbalanced, and further indicates that the first slicing solution needs to be adjusted to determine the more balanced second slicing solution; or when the difference between the largest value and the smallest value in the encoding performance prediction values of the N second slices does not reach the target difference threshold, the first slicing solution is reused.

With reference to the first aspect, in some implementations of the first aspect, the determining the encoding performance prediction values of the N second slices obtained when the first slicing solution is used for the second video frame includes: determining, based on a target prediction model and an encoding parameter and/or a value of encoding performance of an $i^{th}$ first slice in the N first slices, an encoding performance prediction value of an $i^{th}$ second slice in the N second slices that corresponds to the $i^{th}$ first slice, where i is a positive integer less than or equal to N.

According to the technical solutions provided in this application, a prediction model that can accurately predict the encoding performance prediction values of the N second slices is obtained through training and fitting of numerical delays performed on encoding parameters and/or values of encoding performance of the N first slices. The prediction model can be used to guide a slice segmentation process of a video frame.

With reference to the first aspect, in some implementations of the first aspect, the encoding performance prediction value is an encoding delay prediction value, the target prediction model is a target prediction formula, and the determining, based on the target prediction model and the encoding parameter and/or the value of the encoding performance of the $i^{th}$ first slice in the N first slices, the encoding performance prediction value of the $i^{th}$ second slice in the N second slices that corresponds to the $i^{th}$ first slice includes: obtaining a number of encoded bytes of the $i^{th}$ first slice and a number of macroblocks in the $i^{th}$ first slice; and determining, based on the target prediction formula, the number of encoded bytes of the $i^{th}$ first slice, and the number of macroblocks in the $i^{th}$ first slice, an encoding delay prediction value of the $i^{th}$ second slice corresponding to the $i^{th}$ first slice.

According to a second aspect, a video decoding method is provided. The method includes: obtaining an encoded second video frame, where the second video frame includes N encoded third slices, the N third slices are obtained through slice segmentation on the second video frame according to a second slicing solution, the second slicing solution is determined based on encoding performance prediction values of N second slices, the N second slices are obtained by using a first slicing solution for the second video frame, and the first slicing solution is used to segment a first video frame into N first slices; decoding the N encoded third slices to obtain N video frame slices; and splicing the N video frame slices to obtain a decoded second video frame.

In embodiments of this application, the first video frame may be any video frame that is in a video frame sequence and that is arranged before the second video frame, that is, any encoded video frame before the second video frame.

With reference to the second aspect, in some implementations of the second aspect, areas of the N third slices in the second slicing solution are determined by adjusting an area of a part or all of the N second slices.

According to a third aspect, a video encoding apparatus is provided. The apparatus includes: an obtaining module, configured to obtain a first slicing solution of a first video frame, where the first slicing solution is used to segment the first video frame into N first slices, and N is a positive integer greater than or equal to 2; a processing module, configured to: determine encoding performance prediction values of N second slices obtained when the first slicing solution is used for a second video frame, where the N second slices are in one-to-one correspondence with the N first slices, a position of each second slice in the second video frame is the same as a position of a corresponding first slice in the first video frame, and an area of each second slice is the same as an area of the corresponding first slice; and determine a second slicing solution of the second video frame based on the encoding performance prediction values of the N second slices, where the second slicing solution is used to segment the second video frame into N third slices; and an encoding module, configured to: segment the second video frame into the N third slices according to the second slicing solution, and separately encode the N third slices to obtain an encoded second video frame.

With reference to the third aspect, in some implementations of the third aspect, the processing module is specifically configured to adjust an area of a part or all of the N second slices based on the encoding performance prediction values of the N second slices, to obtain the second slicing solution.

With reference to the third aspect, in some implementations of the third aspect, the processing module is specifically configured to: determine a fourth slice from the N second slices, where when the encoding performance prediction value is positively correlated with encoding performance, an encoding performance prediction value of the fourth slice is the smallest; or when the encoding performance prediction value is negatively correlated with encoding performance, an encoding performance prediction value of the fourth slice is the largest; and reduce an area of the fourth slice.

With reference to the third aspect, in some implementations of the third aspect, the processing module is specifically configured to move a slice boundary between the fourth slice and at least one adjacent second slice by K slice rows toward the fourth slice.

With reference to the third aspect, in some implementations of the third aspect, the processing module is further configured to determine a fifth slice from the N second slices, where when the encoding performance prediction value is positively correlated with the encoding performance, an encoding performance prediction value of the fifth slice is the largest; or when the encoding performance prediction value is negatively correlated with the encoding performance, an encoding performance prediction value of the fifth slice is the smallest. The processing module is specifically configured to move one or more slice boundaries between the fourth slice and the fifth slice by K slice rows toward the fourth slice.

With reference to the third aspect, in some implementations of the third aspect, a value of K is 1.

With reference to the third aspect, in some implementations of the third aspect, a value of K is positively correlated with a difference between a largest value and a smallest value in the encoding performance prediction values of the N second slices.

With reference to the third aspect, in some implementations of the third aspect, before determining the second slicing solution of the second video frame, the processing module is further configured to determine that the difference between the largest value and the smallest value in the encoding performance prediction values of the N second slices reaches a target difference threshold.

With reference to the third aspect, in some implementations of the third aspect, the processing module is specifically configured to determine, based on a target prediction model and an encoding parameter and/or a value of encoding performance of an $i^{th}$ first slice in the N first slices, an encoding performance prediction value of an $i^{th}$ second slice in the N second slices that corresponds to the $i^{th}$ first slice, where i is a positive integer less than or equal to N.

With reference to the third aspect, in some implementations of the third aspect, the encoding performance prediction value is an encoding delay prediction value, the target prediction model is a target prediction formula, and the processing module is specifically configured to: obtain a number of encoded bytes of the $i^{th}$ first slice and a number of macroblocks in the $i^{th}$ first slice; and determine, based on the target prediction formula, the number of encoded bytes of the $i^{th}$ first slice, and the number of macroblocks in the $i^{th}$ first slice, an encoding delay prediction value of the $i^{th}$ second slice corresponding to the $i^{th}$ first slice.

According to a fourth aspect, a video decoding apparatus is provided. The apparatus includes: an obtaining module, configured to obtain an encoded second video frame, where the second video frame includes N encoded third slices, the N third slices are obtained through slice segmentation on the second video frame according to a second slicing solution, the second slicing solution is determined based on encoding performance prediction values of N second slices, the N second slices are obtained by using a first slicing solution for the second video frame, and the first slicing solution is used to segment a first video frame into N first slices; and a decoding module, configured to: decode the N encoded third slices to obtain N video frame slices; and splice the N video frame slices to obtain a decoded second video frame.

With reference to the fourth aspect, in some implementations of the fourth aspect, areas of the N third slices in the second slicing solution are determined by adjusting an area of a part or all of the N second slices.

According to a fifth aspect, a video encoder is provided, including a memory and a processor. The processor invokes program code stored in the memory to perform the method according to any one of the first aspect or the possible implementations of the first aspect.

According to a sixth aspect, a video decoder is provided, including a memory and a processor. The processor invokes program code stored in the memory to perform the method according to any one of the second aspect or the possible implementations of the second aspect.

According to a seventh aspect, a computing device is provided, including a processor and a memory. The memory is configured to store instructions, and the processor is configured to execute the instruction stored in the memory, to enable the computing device to perform the method according to any one of the first aspect or the possible implementations of the first aspect, or to enable the computing device to perform the method according to any one of the second aspect or the possible implementations of the second aspect.

According to an eighth aspect, a computing device cluster is provided, including at least one computing device. Each computing device includes a processor and a memory. The memory is configured to store instructions. The processor is configured to: invoke the instructions from the memory, and run the instructions, to enable the computing device cluster to perform the method according to any one of the first aspect or the possible implementations of the first aspect, or to enable the computing device cluster to perform the method according to any one of the second aspect or the possible implementations of the second aspect.

Optionally, the processor may be a general-purpose processor, and may be implemented by hardware or software. When the hardware is used for the implementation, the processor may be a logic circuit, an integrated circuit, or the like. When the software is used for the implementation, the processor may be a general-purpose processor, and is implemented by reading software code stored in the memory. The memory may be integrated into the processor, or may be located outside the processor and exist independently.

According to a ninth aspect, a chip is provided. The chip obtains instructions and executes the instructions to implement the method according to any one of the first aspect or the possible implementations of the first aspect, or implement the method according to any one of the second aspect or the possible implementations of the second aspect.

Optionally, in an implementation, the chip includes a processor and a data interface. The processor reads, through the data interface, instructions stored in a memory, to perform the method according to any one of the first aspect or the possible implementations of the first aspect, or perform the method according to any one of the second aspect or the possible implementations of the second aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect, or the processor is configured to perform the method according to any one of the second aspect or the possible implementations of the second aspect.

According to a tenth aspect, a computer program product including instructions is provided. When the instructions are run by a computing device or a computing device cluster, the computing device or the computing device cluster is enabled to perform the method according to any one of the first aspect or the possible implementations of the first aspect, or perform the method according to any one of the second aspect or the possible implementations of the second aspect.

According to an eleventh aspect, a computer-readable storage medium is provided, including computer program instructions. When the computer instructions are executed by a computing device or a computing device cluster, the computing device or the computing device cluster is enabled to perform the method according to any one of the first aspect or the possible implementations of the first aspect, or perform the method according to any one of the second aspect or the possible implementations of the second aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

## BRIEF DESCRIPTION OF DRAWINGS

FIG. 1 is a diagram of an architecture of a video encoding/decoding system according to an embodiment of this application;

FIG. 2 is a diagram of a video composition structure according to an embodiment of this application;

FIG. 3 is a diagram of a video slicing solution according to an embodiment of this application;

FIG. 4 is a schematic flowchart of a video encoding method according to an embodiment of this application;

FIG. 5 is a schematic flowchart of a video decoding method according to an embodiment of this application;

FIG. 6(a) to FIG. 6(d) are a diagram of determining a slicing solution according to an embodiment of this application;

FIG. 7 is a diagram of fitting results of encoding delays of macroblocks and numbers of encoded bytes of the macroblocks according to an embodiment of this application;

FIG. 8 is a schematic flowchart of determining a slicing solution according to an embodiment of this application;

FIG. 9 is a diagram of implementing a frame-by-frame change of a plurality of slices by adjusting slice boundaries according to an embodiment of this application;

FIG. 10(a) and FIG. 10(b) are a diagram of an experiment result of a video comparison experiment according to an embodiment of this application;

FIG. 11(a) and FIG. 11(b) are a diagram of another experiment result of a video comparison experiment according to an embodiment of this application;

FIG. 12 is a diagram of another experiment result of a video comparison experiment according to an embodiment of this application;

FIG. 13 is a diagram of an experiment result of another video comparison experiment according to an embodiment of this application;

FIG. 14 is a block diagram of a video encoding apparatus according to an embodiment of this application;

FIG. 15 is a block diagram of a video decoding apparatus according to an embodiment of this application;

FIG. 16 is a block diagram of a structure of a computing device according to an embodiment of this application;

FIG. 17 is a block diagram of a structure of a computing device cluster according to an embodiment of this application; and

FIG. 18 is a block diagram of a structure of another computing device cluster according to an embodiment of this application.

## DESCRIPTION OF EMBODIMENTS

The following describes technical solutions in embodiments of this application with reference to accompanying drawings in embodiments of this application.

For ease of understanding the technical solutions in this application, the following briefly describes technical terms used in this application.

1. Video encoding/decoding technologies

A video encoding technology is used to compress an original video to reduce transmission and storage costs of video data. A video encoding process may be: sampling a picture or image data in a video stream, encoding the picture or the image data, and then compressing the picture or the image data into a smaller data packet for transmission. The video encoding technology mainly compresses redundant information in the video data, for example, spatial redundancy caused by a strong association between adjacent pixels in a same video frame, temporal redundancy caused by a strong association between adjacent frames in a video, and visual redundancy in video information that cannot be perceived by human eyes. Current main video encoding standards include H.264 (advanced video coding, AVC), H.265 (high efficiency video coding, HEVC), H.266 (versatile video coding, VVC), and the like.

Correspondingly, a video decoding technology is used to decode or decompress an encoded video. For example, a video decoding process may be as follows: A receiver that plays a video opens a received encoded video data packet, decodes the video data packet, restores the video data packet to a plurality of pictures, and finally arranges the plurality of pictures frame by frame in sequence to form a video stream.

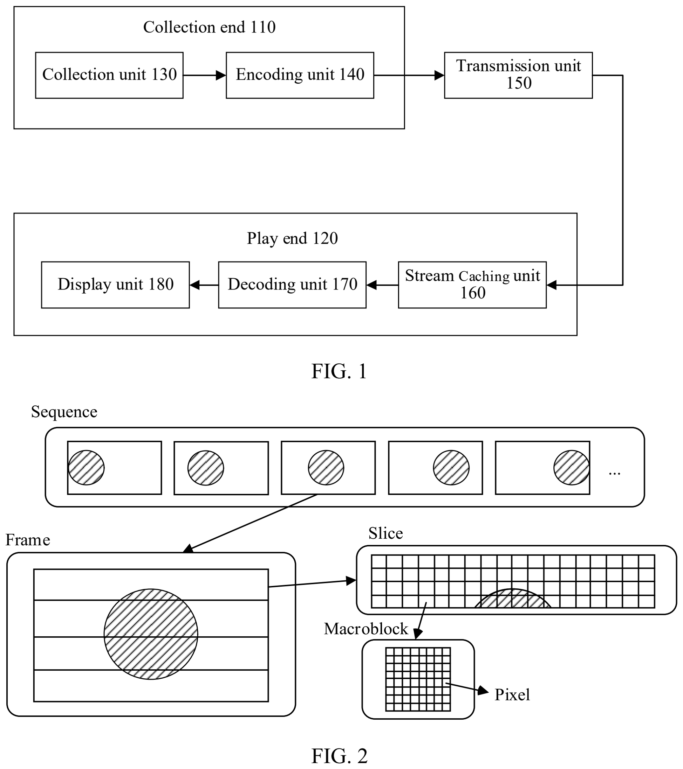

FIG. 1 is a diagram of an architecture of a video encoding/decoding system according to an embodiment of this application. The video encoding/decoding system according to this embodiment of this application may include a collection end 110, a transmission unit 150, and a play end 120. The collection end 110 may include a collection unit 130 and an encoding unit 140, and the play end 120 may include a stream caching unit 160, a decoding unit 170, and a display unit 180.

The collection unit 130 is configured to: collect an image according to a preset frame rate, including but not limited to collecting an image from a camera, collecting an image from a graphics card, collecting an image from a graphics engine, and the like.

The encoding unit 140 is configured to: perform video encoding, and encode each video frame according to a format specified in a video encoding standard, for example, H.264 and H.265 described above. A specific encoding format is not limited in this application. In this embodiment of this application, the encoding unit 140 is configured to: perform parallel encoding on a video frame that is segmented into N slices (slices), and output an encoded video bitstream, where N is a positive integer greater than or equal to 2. The encoding unit 140 may include a software encoder, a hardware encoder, or the like.

The transmission unit 150 is configured to: transmit the video bitstream output by the collection end 110, and distribute the video bitstream to the play end 120.

The stream receiving unit 160 is configured to download and cache a video bitstream, to be specific, download the video bitstream from the transmission unit 150 to a local cache.

The decoding unit 170 is configured to: decode a video bitstream, to be specific, decode a video frame including N encoded slices, re-splice the N slices to obtain a picture or an image of the video frame, and then transmit the picture or the image to the display unit 180. The decoding unit 170 may include a software decoder, a hardware decoder, or the like.

The display unit 180 is configured to display an image, to be specific, display, on a display screen, the image sent by the decoding unit 170.

It should be noted that FIG. 1 is merely a diagram of a system architecture according to an embodiment of this application, and devices, components, modules, or the like shown in the figure constitute no limitation. For example, the collection end 110 may also include a stream sending unit. This is not limited in this application.

2. Sequence (sequence), frame (frame), slice (slice), and macroblock (macroblock)

FIG. 2 shows a composition structure of a video in a video encoding process according to an embodiment of this application. The collection unit 130 generates a sequence (sequence) that includes a plurality of video frames (frames) and that is of a video in a period of time. Each video frame in the sequence is further divided into a plurality of slices (slices), and each slice is an independent encoding unit. Each slice includes a plurality of macroblocks (macroblocks), and each macroblock may be formed by 4x4 to 128x128 pixels (pixels). In some other embodiments of this application, each macroblock may alternatively be formed by an integer number of blocks (blocks), and each block may be formed by a plurality of pixels (pixels). For example, in H.264, the block may be a luminance pixel block including 16x16 pixels and two color pixel blocks including 8x8 pixels. The following describes the foregoing division process in detail.

In the video in the period of time, differences between pixels, brightness, and color temperatures of images of adjacent video frames are usually small. Therefore, a $1^{st}$ video frame in this period of time may be selected for complete encoding, and a process of encoding a next video frame only needs to record differences between features such as pixels, brightness, and color temperatures of the next video frame and the $1^{st}$ video frame. The foregoing video image set whose video content does not change greatly in the period of time is referred to as the sequence, in other words, the sequence includes data of a segment of video frames that have same or similar features. Types of video frames include an I (intra-coded) frame that represents a key frame, a P (predictive-coded) frame used to record a difference from a previous frame, and a B (bidirectionally predicted) frame used to record differences from a previous frame and a next frame. For example, a first frame in the sequence may be an I-frame, and another frame may be a P-frame or a B-frame.

In current video standards such as H.264, H.265, and H.266, each video frame may be segmented into one or more slices, and each slice may be independently encoded and decoded by using an independent processor, without depending on another slice in the same video frame. As shown in FIG. 2, a video frame is segmented into four slices. A number of slices is not limited in this embodiment of this application. In this embodiment of this application, areas (in other words, numbers of included macroblocks) of a plurality of slices may be same areas that are evenly distributed, or may be different areas, in other words, numbers of included macroblocks are different. In some other embodiments of this application, a shape of a slice may be a rectangle shown in FIG. 2, or may be an irregular shape, in other words, a slice boundary between adjacent slices crosses a plurality of macroblock rows. For example, a macroblock row is divided into two parts by a slice boundary. The first part is a last macroblock row of an $i^{th}$ slice, and the second part is a $1^{st}$ macroblock row of an $(i+1)^{th}$ slice.

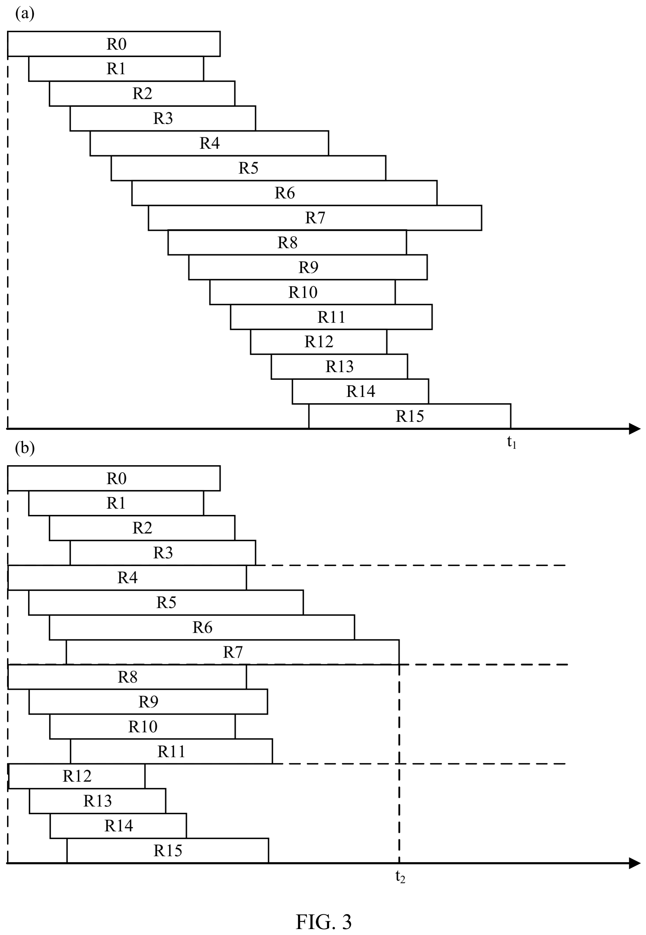

Advantages of the slice segmentation on the video frame lie in reducing error spreading, reducing a size of a transmitted data packet, implementing parallel encoding/decoding processing on the plurality of slices, and the like. During the parallel encoding/decoding processing, after the slice segmentation is performed on the video frame, total encoding performance of the video frame depends on a slice with worst encoding performance. If an encoding delay is used as a consideration of the encoding performance, FIG. 3 is a diagram of an encoding manner without a slice and an encoding manner with a slice. R0 to R15 are slice rows, and the slice rows are rows formed by most basic video encoding units in this embodiment of this application. For example, if the most basic video encoding unit is a single macroblock, the slice row may be a macroblock row formed by an entire row of macroblocks; or if the most basic video encoding unit is a single pixel, the slice row may be a pixel row formed by an entire row of pixels. A type of a slice row that is used for encoding and that is in a slice and a number of slice rows are not limited in this application. The 16 slice rows shown in FIG. 3 are merely used as an example.

Based on a kernel design of encoding of an encoder, when each video encoding unit in a slice row is encoded, each video encoding unit needs to depend on an encoded video encoding unit for prediction. Generally, in a slice, macroblocks or pixels are encoded in a scanning order. For example, if the video encoding unit is a pixel, each pixel in a $1^{st}$ slice row depends on a previous encoded pixel for prediction, and a $1^{st}$ pixel in a $2^{nd}$ slice row needs to depend on an encoded pixel in the $1^{st}$ row for prediction. Therefore, as shown in FIG. 3, encoding start time of each slice row is slightly later than that of a previous slice row on which encoding has started.

As shown in (a) in FIG. 3, if slice segmentation is not performed on a video frame, a total encoding delay of the video frame depends on a last slice row or a slice row on which an encoding process ends latest. In other words, the total encoding delay of the video frame is encoding completion time $t_1$ of the slice row R15 shown in (a) in FIG. 3. As shown in (b) in FIG. 3, if slice segmentation is performed on a video frame, each slice is independently encoded, a total encoding delay of the video frame depends on a slice on which an encoding process ends latest. In other words, the total encoding delay of the video frame is encoding completion time $t_2$ of the slice row R7 shown in (b) in FIG. 3. This is because, as shown in (b) in FIG. 3, R4, R8, and R12 that originally need to wait for a previously encoded slice row may start to be encoded together with R0. Therefore, a total encoding delay of a video is reduced. $t_2$ is less than $t_1$, and the total encoding delay of the video frame in (b) in FIG. 3 is less than the total encoding delay in (a) in FIG. 3. Therefore, it can be learned that the slice segmentation on the video frame improves overall encoding performance.

Most current conventional slice segmentation manners are fixed and even slice segmentation manners, to be specific, a same slice segmentation solution is used for each frame, and areas of all slices are the same. For example, each video frame in the sequence is evenly segmented into four slices shown in (b) in FIG. 3.

However, with the application and expansion of a plurality of real-time fields such as video conferencing, online education, remote terminals, game interaction, e-commerce interactive live broadcasting, and telemedicine, the conventional fixed and even slice segmentation manner is not applicable to a real-time video encoding process in the foregoing fields. This is because video content in the foregoing fields has an unbalanced problem. To be specific, a part of video frame content changes slightly, and has a smooth texture, low video complexity, and a fast encoding speed, while the other part changes dramatically, and has a complex texture, high video complexity, and a slow encoding speed. As a result, encoding performance of slices in a same video frame is unbalanced. For example, in a video conference or an interactive live broadcast, video content including a portrait changes more dramatically than video content including a background wall. As shown in (b) in FIG. 3, if the even slice segmentation manner is used, an encoding delay of a $2^{nd}$ slice including a portrait is far greater than that of a $4^{th}$ slice including a background wall. Therefore, the $4^{th}$ slice is encoded first, but encoding of a next frame cannot be started in advance until the $2^{nd}$ slice is encoded.

In addition, a video used for encoding may include a plurality of sequences, and change trends of adjacent video frames in each sequence or video frames included in different sequences are different. If a fixed slice segmentation solution is used for all video frames, encoding performance of some video frames is far lower than encoding performance of other video frames. For example, a $1^{st}$ slice in an $i^{th}$ video frame includes a portrait that changes dramatically, and a $2^{nd}$ slice includes a background wall that changes slowly; and a $1^{st}$ slice in an $m^{th}$ video frame includes a background wall that changes slowly, and a $2^{nd}$ slice includes a portrait that changes dramatically. If a same slice segmentation manner as that of the $i^{th}$ video frame is used for the $m^{th}$ video frame, encoding performance of the two video frames is unbalanced, to be specific, encoding performance of the $m^{th}$ video frame is far lower than encoding performance of the $i^{th}$ video frame.

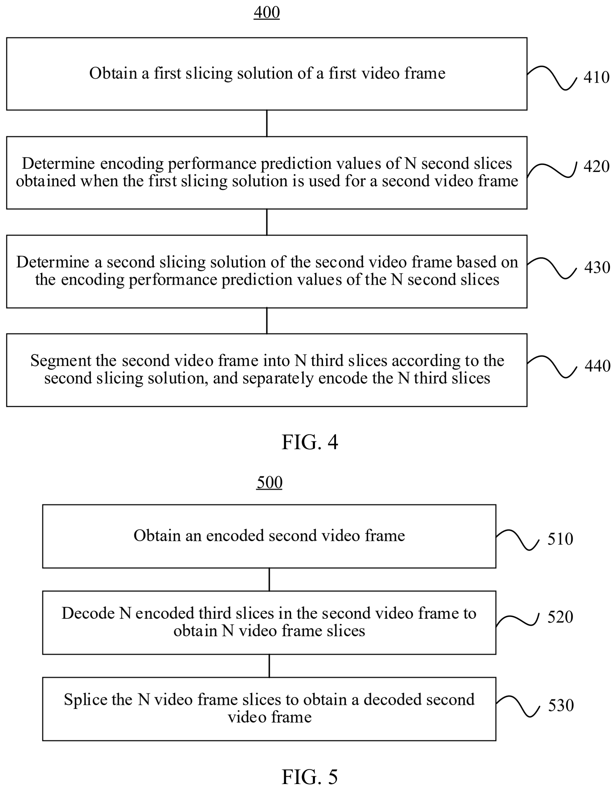

To resolve a problem of unbalanced encoding performance of slices in the video frame and of video frames, this application provides a video encoding method 400. FIG. 4 is a schematic flowchart of a video encoding method 400 according to an embodiment of this application. The method 400 includes steps 410 to 440. In the method 400, encoding performance of each slice in a current video frame is predicted according to a slicing solution of a first video frame, to determine a slicing solution corresponding to the current video frame. The slicing solution corresponding to the current frame may be different from the slicing solution of the first video frame, so that a dynamic slicing process of different video frames is implemented. An apparatus for implementing the method 400 may be the encoding unit 140 shown in FIG. 1.

Step 410: Obtain a first slicing solution of the first video frame.

The first video frame is an encoded video frame. The first slicing solution is used to segment the first video frame into N first slices, where N is a positive integer greater than or equal to 2. Areas of the N first slices may be the same. For example, the first video frame is a key frame I-frame in a sequence. To be specific, when it is difficult to perform predictive encoding on the first video frame with reference to a previous video frame or several previous video frames that are greatly different from the first video frame, in this embodiment of this application, an even slice segmentation manner may be used for the first video frame. Areas of the N first slices may alternatively be different. For example, when the first video frame is a P-frame or a B-frame, the areas of the N first slices correspond to actual video content change situations of the first video frame, to be specific, a more complex change degree of included video content indicates a smaller area of the first slice.

Step 420: Determine encoding performance prediction values of N second slices obtained when the first slicing solution is used for a second video frame.

The second video frame is a current video frame, that is, a to-be-encoded video frame. The second video frame may be a frame next to the first video frame, or may be any frame arranged after the first video frame in a video frame sequence. In other words, the first video frame is any encoded video frame before the second video frame. In embodiments of this application, the second video frame is preferably the frame next to the first video frame. In this way, a process of determining or adjusting a slicing solution is smoother, so that encoding performance of an entire video can be improved.

The encoding performance may be any one or more of an encoding delay, an encoding speed, encoding complexity, encoding efficiency, and adaptive bit rate control. For example, in a scenario that has a high requirement on a delay, for example, live broadcasting, video conferencing, or cloud gaming, encoding performance may be an encoding delay or an encoding speed, to be specific, higher encoding performance indicates a lower encoding delay or a higher encoding speed. In a scenario that has a high requirement on both video quality and a delay, for example, telemedicine, encoding performance may be encoding efficiency or a compression rate, to be specific, higher encoding performance indicates higher encoding efficiency or a higher compression rate.

Predicted encoding performance is predicted encoding performance of the N second slices obtained by using the first slicing solution for the second video frame. In embodiments of this application, a reason for using the first slicing solution is that, based on the foregoing descriptions of the sequence, if the second video frame and the first video frame are in a same sequence or even adjacent video frames in a same sequence, differences between pixels, brightness, and color temperatures of the two video frames are small, and a difference between slicing solutions of the two video frames is also small.

The N second slices are slices determined when the first slicing solution is used for the second video frame. The N second slices are in one-to-one correspondence with the N first slices, a position of each second slice in the second video frame is the same as a position of a corresponding first slice in the first video frame, and an area of each second slice is the same as an area of the corresponding first slice. It should be noted that the N second slices are not obtained through actual segmentation on the second video frame, but are reference slices that are determined according to a slice segmentation manner of the first slicing solution and that are used to predict encoding performance.

In this embodiment of this application, the encoding performance prediction value of each second slice may be determined based on an empirical formula, a fitting formula, a prediction model, or the like. The following describes in detail a manner of predicting the encoding performance. Details are not described herein.

Step 430: Determine a second slicing solution of the second video frame based on the encoding performance prediction values of the N second slices.

Based on the encoding performance prediction value that is of each second slice in the second video frame and that is obtained in step 420, whether the N second slices have unbalanced encoding performance may be determined. If the encoding performance is unbalanced, to be specific, predicted encoding performance of a part of the second slices is far lower than predicted encoding performance of another second slice, in this embodiment of this application, the first slicing solution may be adjusted, to be specific, an area of the part of the second slices is reduced, to finally obtain the second slicing solution in which encoding performance is balanced. The following describes a specific adjustment manner. Details are not described herein. In some other embodiments of this application, if predicted encoding performance of the slices is balanced, or a difference between a largest value and a smallest value in the encoding performance prediction values of the N second slices is small, the first slicing solution may be directly reused as the second slicing solution.

Step 440: Segment the second video frame into N third slices according to the second slicing solution, and separately encode the N third slices.

If the second slicing solution is adjusted relative to the first slicing solution, areas of the N third slices are different from areas of the N second slices, and encoding performance of the N third slices is more balanced. If the second slicing solution is the same as the first slicing solution, areas of the N third slices are the same as areas of the N second slices. Parallel encoding is performed on the N third slices, so that an encoding speed is accelerated. In addition, if an encoding error occurs in one or more third slices, the error may be limited to the one or more third slices, and is not spread to another third slice, so that an artifact area is small during decoding.

In embodiments of this application, predicted encoding performance of a current video frame, namely, the second video frame, is determined, to determine the second slicing solution that is suitable for the second video frame and in which the encoding performance is more balanced, thereby significantly improving encoding performance of the entire video frame and even an entire video.

The method 400 may be applied to any real-time video encoding scenario, for example, the foregoing video conferencing, online education, remote terminals, game interaction, e-commerce interactive live broadcasting, and telemedicine. For example, in a real-time interactive cloud gaming scenario, game content is rendered and generated on a cloud server, a player performs a game operation on a client, the client uploads operation instructions to the cloud, and the cloud generates the game content according to the user operation instructions, and then encodes the game content and transmits the game content to the client over a network. For another example, in a live broadcasting and video conferencing scenario, a host or a live streamer needs to perform real-time interactive communication with a plurality of parties through video. In these scenarios, both a high encoding speed and a low encoding delay are important.

The method according to this application may be applied to various real-time video application programs, including but not limited to a video conference application, a voice over internet protocol application, a streaming media application, and the like. Related technical products may include a codec, video conference software, a streaming media server, and the like. The method according to this application may be implemented by a hardware device or a software product, or may be implemented by a software platform provided in a form of a service or a software development kit (software development kit, SDK) matching a cloud service.

Correspondingly, FIG. 5 is a schematic flowchart of a video decoding method 500 according to an embodiment of this application. The method 500 includes steps 510 to 530. An apparatus for implementing the method 500 may be the decoding unit 170 shown in FIG. 1.

Step 510: Obtain an encoded second video frame. The second video frame includes the foregoing N third slices that are obtained through parallel encoding.

Step 520: Decode the N encoded third slices in the second video frame to obtain N video frame slices.

Step 530: Splice the N video frame slices to obtain a decoded second video frame.

The manner of splicing the N video frame slices may be: calculating a position of each frame slice in the video frame based on a position field first_mb_in_slice in a $1^{st}$ macroblock in each frame slice, and splicing the N video frame slices one by one based on a position sequence.

The following describes an implementation process of the method 400 or step 420 and step 430 with reference to specific embodiments.

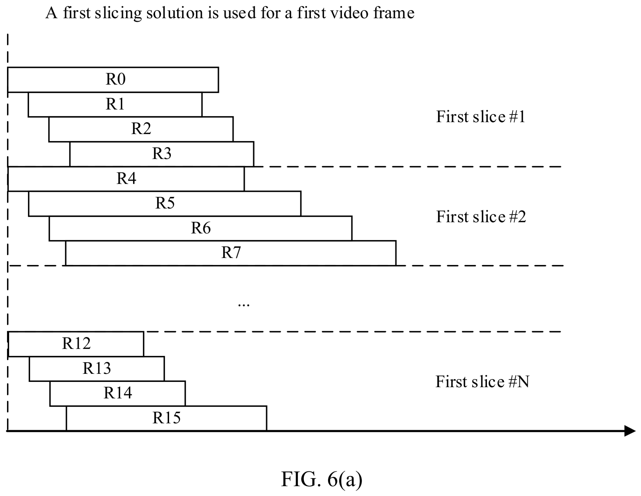

FIG. 6(a) to FIG. 6(d) are a block diagram of determining a slicing solution according to an embodiment of this application.

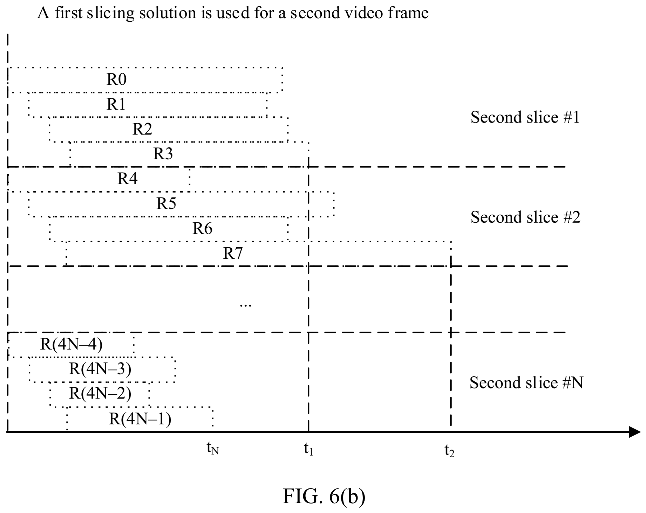

As shown in FIG. 6(a), the first video frame is segmented into the N first slices according to the first slicing solution. In step 420, as shown in FIG. 6(b), the N second slices are obtained by using the first slicing solution for the second video frame. Dashed lines in FIG. 6(b) indicate that the N second slices in the figure are not actual segmentations of the second video frame, but are only used as reference slices obtained through simulated slice segmentation on the second video frame when encoding performance is predicted. In other words, the N second slices are only used as the reference slices in a prediction process, and are not slices obtained in an actual slice segmentation process.

The predicted encoding performance of the N second slices, for example, encoding delays shown in FIG. 6(a) to FIG. 6(d), is finally obtained by using a method like an empirical formula, a fitting formula, or a prediction model. An encoding delay of a second slice #2 is higher than that of a second slice #1 and is far higher than that of a second slice #N. The following specifically describes a technical solution for determining an encoding performance prediction value in an embodiment of this application.

Optionally, in this embodiment of this application, the prediction model may be used to predict the encoding performance. The prediction model may be an artificial neural network model or a decision tree model like a random forest or XGBoost. During training of the prediction model, an input of the prediction model may be a related parameter of each slice in a $k_1^{th}$ video frame, for example, any one or more of the following: encoding performance such as an encoding delay of each slice and a number of encoded bytes of each slice, and encoding parameters such as an encoding bit rate, a number of included macroblocks or pixels, and an encoding type. An output of the prediction model may be actual encoding performance of each slice obtained by performing slice segmentation on a $k_2^{th}$ video frame according to a slicing solution of the $k_1^{th}$ frame. In this way, when prediction is performed by using the prediction model, the encoding performance prediction values of the N second slices can be determined based on values of related parameters of the N first slices.

Optionally, in this embodiment of this application, the encoding performance of the N second slices may be predicted by using a fitting formula obtained through training. An encoding delay shown in FIG. 6(b) is used as a consideration of encoding performance. To accurately predict a dependent variable, to be specific, an encoding delay of each second slice, an appropriate independent variable needs to be selected.

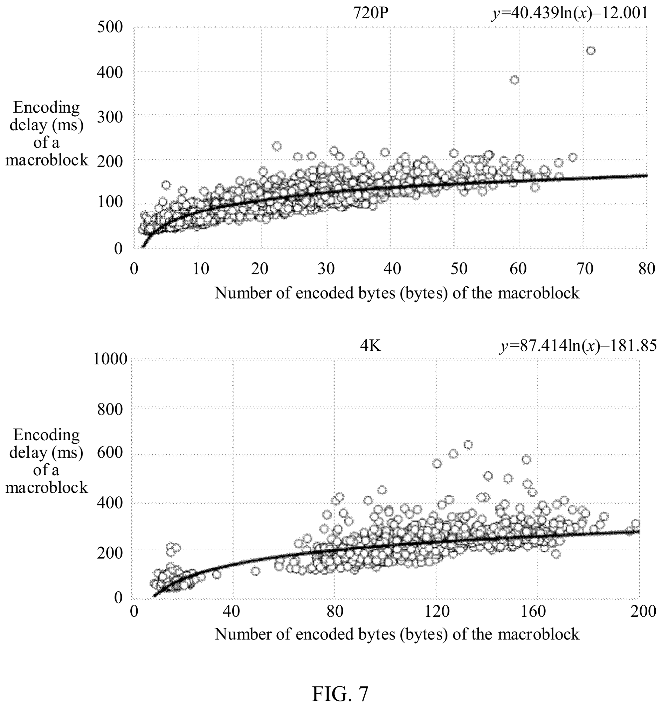

For example, the following provides an example of a fitting formula. Through training and fitting of a numerical delay, in this embodiment of this application, it is learned that there is a logarithmic relationship between an encoding delay of each macroblock and a number of encoded bytes of the macroblock. The number of encoded bytes of the macroblock is related to a motion magnitude and details of an image region in the macroblock. FIG. 7 is a diagram of fitting results of an encoding delay of each macroblock and a number of encoded bytes of the macroblock in 720P and 4K video resolutions, where the figure includes scatter values and a fitting formula. It can be learned from FIG. 7 that a fitting result of the fitting formula has a small error in most cases. Actually, other cases with a large error are mostly cases in which a scenario changes or a sequence switch occurs in a video, that is, cases in which a current frame is a key frame I-frame.

Two fitting formulas in FIG. 7 may be represented by using Formula 1.

$$macroblock\_time = a \times ln(macroblock\_size) + b \text{ (Formula 1)}$$

*macroblock_size* is the number of encoded bytes (bytes) of the macroblock, and *macroblock_time* is the encoding delay (ms) of the macroblock. Values of *a* and *b* may depend not only on information such as a resolution of a video, but also on a platform for performing video encoding, for example, video encoders of different types or models or different apparatuses provided with video encoders of a same type or model.

Formula 1 indicates that encoding time of the macroblock is related to the number of encoded bytes of the macroblock. In addition, because a change degree between video frames in a same sequence is small, a number of encoded bytes of a macroblock in the first video frame is basically the same as a number of encoded bytes of a macroblock at a same position in the second video frame. Therefore, in this embodiment of this application, when an encoding delay of each second slice is predicted, a number of encoded bytes of a macroblock in each first slice may be reused as a predicted number of encoded bytes of a macroblock at a same position in a corresponding second slice.

A final predicted encoding delay of the second slice is shown in Formula 2.

$$pre\_slice\_time = \sum_{i=1}^{n}[a \times \ln(macroblock\_size_i) + b] \text{ (Formula 2)}$$

*pre_slice_time* is an encoding delay prediction value (ms) of the second slice, and *macroblock_size_i* is a predicted number of encoded bytes (bytes) of an $i^{th}$ macroblock in the second slice, that is, an actual number of encoded bytes of an $i^{th}$ macroblock in the first slice corresponding to the second slice, where the second slice includes n macroblocks in total.

In some other embodiments of this application, to reduce calculation time of an encoding process, numbers of encoded bytes of a plurality of macroblocks in the second slice may be considered approximately the same, in other words, a predicted number of encoded bytes of each macroblock is a ratio of a predicted total number of encoded bytes of the second slice to a number of macroblocks in the second slice, or a ratio of a total number of encoded bytes of the first slice corresponding to the second slice to a number of macroblocks in the first slice. Further, Formula 2 may be equivalently converted into Formula 3.

$$pre\_slice\_time = [a \times ln\left(\frac{slice\_size}{num\_of\_macroblocks}\right) + b] \times num\_of\_macroblocks \text{ (Formula 3)}$$

*slice_size* is the predicted total number of encoded bytes of the second slice, that is, the total number of encoded bytes of the corresponding first slice, and *num_of_macroblocks* is the number of macroblocks in the second slice.

Optionally, in some other embodiments of this application, Formula 3 may be trained or fitted based on historical data used for training the prediction model, to finally obtain specific values of *a* and *b*. In step 420, the encoding delay prediction value of the second slice may be predicted according to Formula 3 including the specific values of *a* and *b*.

In some other embodiments of this application, if only a magnitude sorting relationship of predicted encoding delays of the second slices needs to be compared, and specific values do not need to be predicted, constant values may be directly selected for *a* and *b*. For example, *a* is 1, and *b* is 0. In this case, Formula 3 may be converted into Formula 4.

$$pre\_slice\_time = ln\left(\frac{slice\_size}{num\_of\_macroblocks}\right) \times num\_of\_macroblocks \text{ (Formula 4)}$$

The magnitude relationship of the predicted encoding delays of the second slices may be obtained according to Formula 4. For example, an obtained magnitude relationship of encoding delays of second slices shown in FIG. 6(b) is as follows: the encoding delay of the second slice #2>the encoding delay of the second slice #1>the encoding delay of the second slice #N. When the second slicing solution is subsequently determined, the areas of the N second slices or the areas of the N first slices corresponding to the N second slices may be adjusted only for a second slice that ranks in the front or the back in the magnitude relationship.

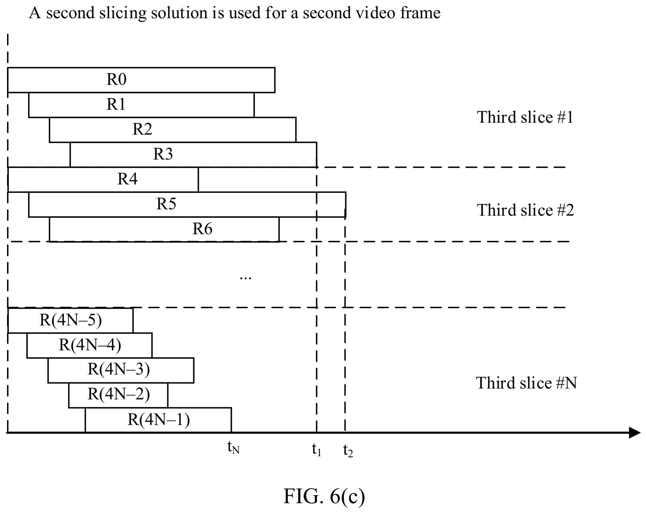

In step 430, the second slicing solution is determined based on encoding delay prediction values $t_1$ to $t_N$ of the second slices shown in FIG. 6(b). The second slicing solution may be a second slicing solution determined through adjustment based on the first slicing solution, for example, the second slicing solution shown in FIG. 6(c), or may be the reused first slicing solution.

Optionally, in this embodiment of this application, before the second slicing solution is determined, the method 400 may further include: determining whether predicted encoding delays of the N second slices are balanced, for example, whether a difference between a largest value and a smallest value of the predicted encoding delays of the N second slices is greater than a target difference threshold. For example, it is determined whether the difference between the smallest value and the largest value of the predicted encoding delays of the N second slices is greater than 20% of the largest value, whether the difference between the largest value and the smallest value is greater than 100 ms, or the like. When it is determined that the predicted encoding delays of the N second slices are unbalanced, it is determined that the first slicing solution needs to be adjusted to determine the second slicing solution. In this way, frequent adjustment of a slicing solution in a process of encoding consecutive video frames can be reduced.

The following describes in detail an embodiment of adjusting a first slicing solution to obtain a second slicing solution.

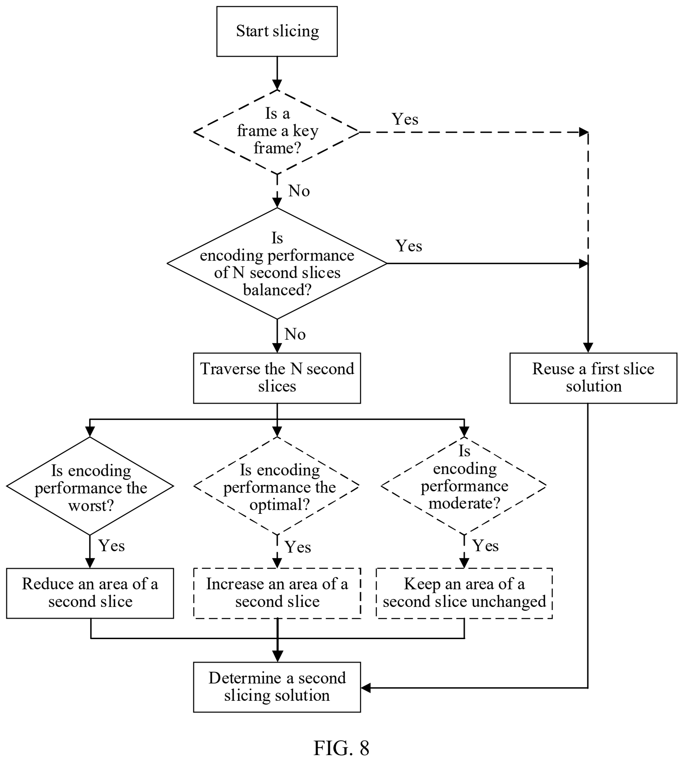

FIG. 8 is a schematic flowchart of determining a second slicing solution according to an embodiment of this application. Dashed line parts represent optional steps. When an encoding performance prediction value is positively correlated with encoding performance, encoding performance of a second slice with a largest encoding performance prediction value is optimal; or when an encoding performance prediction value is negatively correlated with encoding performance, encoding performance of a second slice with a smallest encoding performance prediction value is the worst.

If an encoding delay is considered as the encoding performance, N second slices are traversed when it is determined that a second video frame is not a key frame I-frame and predicted encoding performance (that is, encoding delays) of the N second slices is unbalanced. First, a second slice with worst encoding performance, that is, a highest encoding delay, for example, the second slice #2 shown in FIG. 6(b), is determined, and an area of the second slice #2 is adjusted, for example, a number of macroblocks or a number of slice rows is reduced. Preferably, to obtain higher adjustment efficiency, in this embodiment of this application, a manner of adjusting the area of the second slice is selected as reducing K slice rows. As shown in FIG. 6(c), a third slice #2 has one less slice row than the second slice #2. In this embodiment of this application, a value of K is related to a difference between a largest value and a smallest value of encoding performance prediction values. For example, a larger difference indicates a larger value of K. In some other embodiments of this application, to reduce an adjustment amplitude of a slice solution to avoid frequent adjustment, a value of K may be 1.

Optionally, macroblocks or slice rows reduced from the second slice #2 may be evenly distributed to other second slices, so that a part or all of the other second slices each is added with one or more macroblocks.

Optionally, as shown in FIG. 8, in this embodiment of this application, a second slice with optimal encoding performance, that is, a smallest encoding delay, namely, the second slice #N shown in FIG. 6(b), may be further determined, a macroblock or slice row reduced from the second slice #2 is distributed to the second slice #N, and an area of another second slice may remain unchanged. As shown in FIG. 6(c), a third slice #N has one more slice row than the second slice #N.

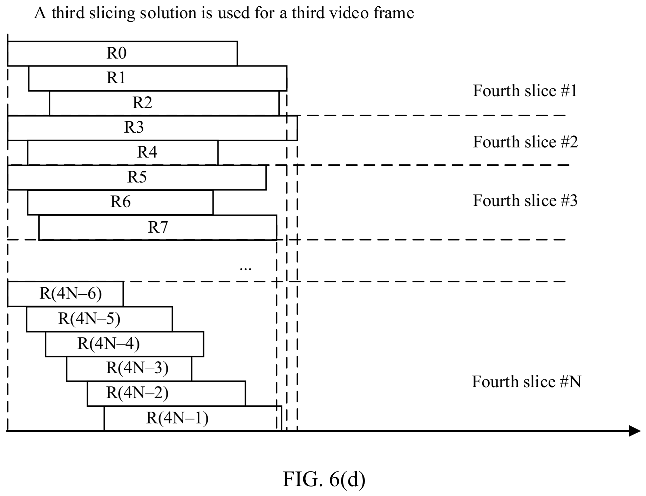

Finally, as shown in FIG. 6(c), the second slicing solution is determined through adjustment on the first slicing solution, and N third slices are obtained through slice segmentation on the second video frame according to the second slicing solution. In this way, in comparison with encoding performance of N first slices, encoding performance of the N third slices is more balanced, and a total encoding delay shown in FIG. 6(c) is lower than a total encoding delay shown in FIG. 6(b). Similarly, if the encoding performance of the N third slices in the second video frame still does not meet a balance requirement, in this application, a third slicing solution is determined when a third video frame is encoded. As shown in FIG. 6(d), a fourth slice #1 and a fourth slice #2 in the third video frame each have one less slice row in comparison with a third slice #1 and the third slice #2, and a fourth slice #N has one more slice row in comparison with the third slice #N.

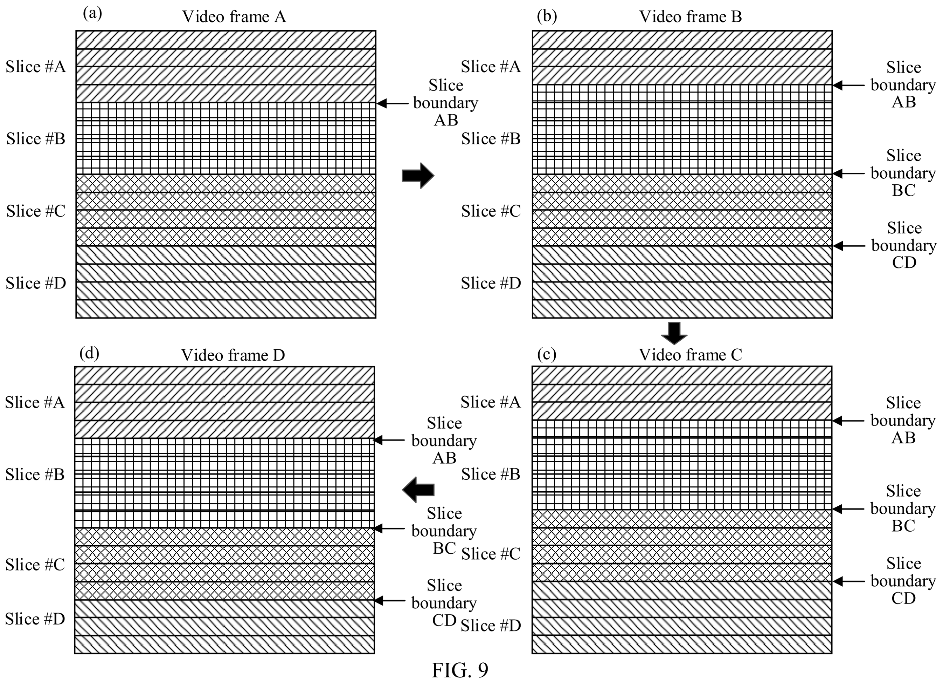

Optionally, a manner of adding or deleting a slice row may be directly adjusting a slice boundary between slices. FIG. 9 is a diagram of a frame-by-frame change of a slicing solution. As shown in (a) in FIG. 9, a video frame A is segmented into a slice #A to a slice #D. (b), (c), and (d) in FIG. 9 respectively show different slice boundary adjustment manners.

For example, with reference to Formula 4, for a 1024x1920 video, assuming that a video frame is divided into four slices shown in FIG. 9, and each macroblock includes 64x64 pixels, each video frame includes 480 macroblocks in total. Table 1 shows a data table of predicted encoding performance corresponding to the video frame A. A second column and a third column of Table 1 show numbers of encoded bytes of slices in the video frame A and numbers of included macroblocks, and a fourth column of Table 1 shows predicted encoding delays that are obtained by using a slicing solution of the video frame A for a video frame B and that are calculated according to Formula 4. The number of macroblocks may be obtained based on a *slice_segment_address* field in a video analyzer, and the number of encoded bytes of the slice may be obtained based on a slice size in a video analysis tool.

Table 1

| Slice | Number of encoded bytes (bytes) of a slice | Number of macroblocks | Predicted encoding delay (ms) |
|---|---|---|---|
| #A | 3533 | 120 | 406 |
| #B | 244 | 120 | 85 |
| #C | 1272 | 120 | 283 |
| #D | 2411 | 120 | 360 |

It can be learned based on the predicted encoding delay in the fourth column of Table 1 and the procedure of adjusting the area of the slice in FIG. 8 that the slice #A needs to be reduced by one slice row, and the slice #B needs to be increased by one slice row. As shown in (b) in FIG. 9, a slice boundary AB between the slice #A and the slice #B is moved by one row in a direction close to the slice #A, to obtain a slicing solution of the video frame B. In other words, if two slices that need to be adjusted are adjacent slices, a slice boundary between the two slices may be moved by one slice row in a direction close to a slice with worst encoding performance. After the video frame B is encoded, a data table of predicted encoding performance corresponding to the video frame B shown in Table 2 may be obtained, where a fourth column of Table 2 shows predicted encoding delays when the slicing solution of the video frame B is used for a video frame C.

Table 2

| Slice | Number of encoded bytes (bytes) of a slice | Number of macroblocks | Predicted encoding delay (ms) |
|---|---|---|---|
| #A | 2788 | 90 | 309 |
| #B | 1266 | 150 | 320 |
| #C | 1990 | 120 | 337 |
| #D | 2411 | 120 | 360 |

Based on the predicted encoding delay shown in the fourth column of Table 2, a difference between a largest value 360 ms and a smallest value 309 ms of predicted encoding delays does not reach 100 ms or 20% of the largest value 360 ms. Therefore, as shown in (c) in FIG. 9, a slicing solution of the video frame C is not adjusted based on the slicing solution of the video frame B. After the video frame C is encoded, a data table of predicted encoding performance corresponding to the video frame C shown in Table 3 may be obtained, where a fourth column of Table 3 shows predicted encoding delays when the slicing solution of the video frame C is used for a video frame D.

Table 3

| Slice | Number of encoded bytes (bytes) of a slice | Number of macroblocks | Predicted encoding delay (ms) |
|---|---|---|---|
| #A | 1084 | 90 | 224 |
| #B | 356 | 150 | 140 |
| #C | 305 | 120 | 112 |
| #D | 47 | 120 | 35 |

It can be learned based on the predicted encoding delay in the fourth column of Table 3 and the procedure of adjusting the area of the slice in FIG. 8 that the slice #A needs to be reduced by one slice row, and the slice #D needs to be increased by one slice row. As shown in (d) in FIG. 9, all slice boundaries (slice boundaries AB, BC, and CD) between the slice #A and the slice #D are moved by one row in a direction close to the slice #A, to obtain a slicing solution of the video frame D. In other words, if two slices that need to be adjusted are not adjacent slices, all slice boundaries between the two slices may be moved by one slice row in a direction close to a slice with worst encoding performance. In this way, the slice boundaries can be smoothly moved row by row between consecutive frames.

In this application, predicted encoding performance of a current video frame is determined, and a slicing solution corresponding to the current video frame is determined, so that encoding performance of slices obtained through slice segmentation on the current video frame is more balanced, and overall encoding performance of the current video frame is improved.

The following describes beneficial effects of embodiments of this application with reference to specific experiment results.

Table 4 and Table 5 show experiment results of videos of different types or different resolutions provided in embodiments of this application.

Table 4 shows encoding speeds (frames per second, FPS) and encoding quality (quality) that are of 18 videos in total and that are obtained by using the video encoding method in this application in two scenarios: a live show and live commerce. Resolutions of the 18 videos range from 480x720 to 1080x1920. It can be learned from Table 4 that, in the two scenarios: the live show and the live commerce, an average encoding speed of the 18 videos is increased by 6%, where an encoding speed is increased by a maximum of 19%, and average encoding quality is almost unchanged.

Table 4

| Dataset | Average | | Max | | Min | |
|---|---|---|---|---|---|---|
| | FPS | Quality | FPS | Quality | FPS | Quality |
| Live show | 6.34% | -0.06% | 18.16% | 0.10% | -1.52% | -0.26% |
| Live commerce | 6.18% | 0.07% | 19.08% | 0.38% | 0.24% | -0.03% |

Table 5 shows encoding speeds (frames per second, FPS) and encoding quality (quality) that are of 30 videos and that are obtained by using the video encoding method in this application in a gaming scenario. Resolutions of the 30 videos are classified into three types: less than 2K, 2K, and 4K. It can be learned from Table 5 that, in the gaming scenario, an average encoding speed of the 30 videos is increased by 3% to 4%, where an encoding speed is increased by a maximum of 10%, and average encoding quality is almost unchanged.

Table 5

| Dataset | Average | | Max | | Min | |
|---|---|---|---|---|---|---|
| | FPS | Quality | FPS | Quality | FPS | Quality |
| <2K | 3.28% | -0.02% | 5.84% | 0.19% | 0.37% | -0.33% |
| 2K | 4.49% | 0.10% | 10.21% | 0.31% | -0.09% | -0.15% |
| 4K | 3.16% | 0.07% | 9.45% | 0.27% | -0.33% | -0.08% |

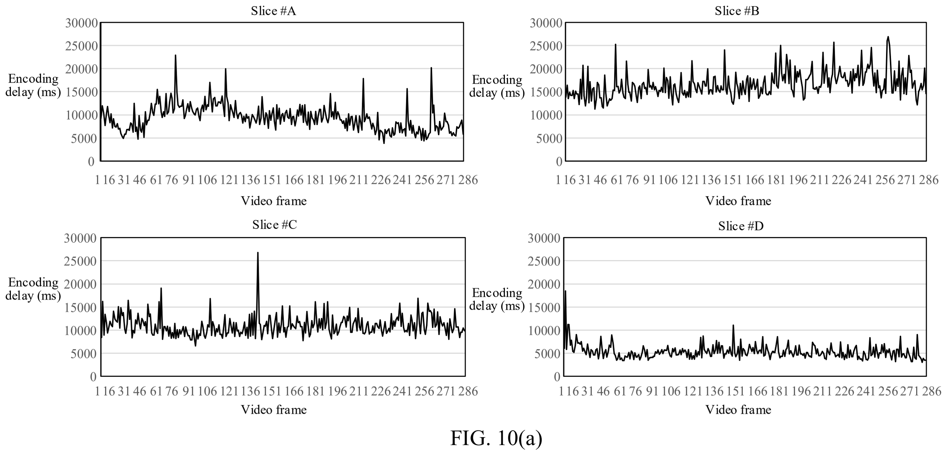

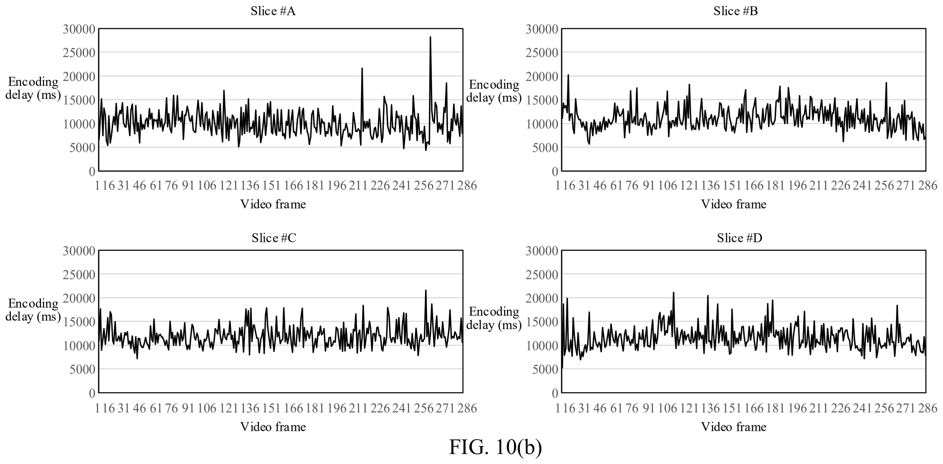

FIG. 10(a) and FIG. 10(b) are a diagram of an experiment result of a video comparison experiment according to an embodiment of this application. FIG. 10(a) and FIG. 10(b) show encoding delays of slices in a plurality of video frames in an experiment video. The experiment result of FIG. 10(a) and FIG. 10(b) is obtained by using, for video frames in a same video, a video encoding method including a conventional even and fixed slicing solution and a video encoding method including a dynamic slicing solution in this application.

As shown in FIG. 10(a), when the conventional even and fixed slicing solution is used, encoding delays of four slices are unbalanced. For example, encoding delays of a slice #A and a slice #C are approximately 5s to 15s, encoding delays of a slice #B are approximately 15s to 25s, and encoding delays of a slice #D are concentrated in 5s to 10s. As shown in FIG. 10(b), when the dynamic slicing solution in this application is used, encoding delays of a slice #A to a slice #D are balanced, and the encoding delays are all concentrated in 10s to 15s. Therefore, according to the dynamic slicing method in this application, the encoding delays of the slices can be balanced, and a total encoding delay of a video frame, that is, an encoding delay of a slice on which an encoding process is completed latest, is significantly reduced.

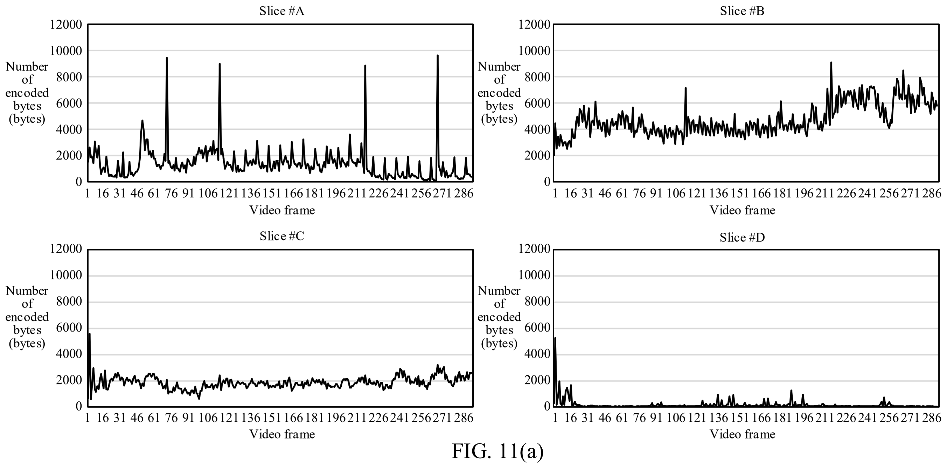

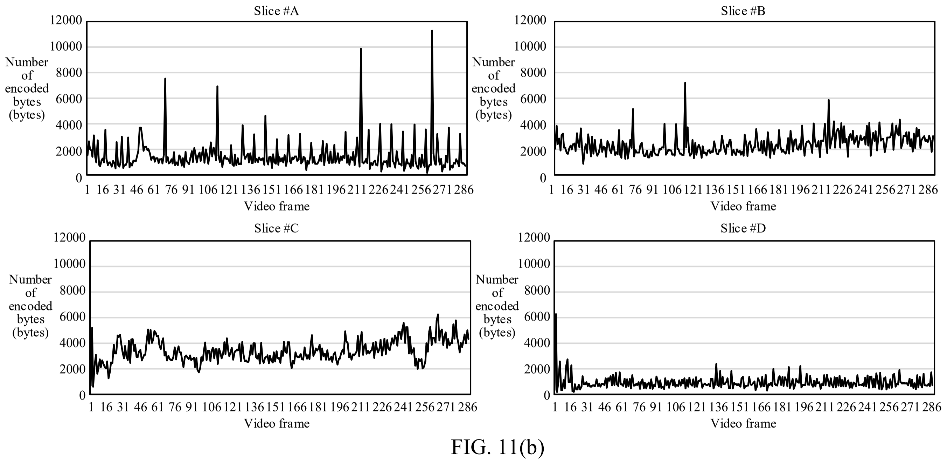

FIG. 11(a) and FIG. 11(b) are a diagram of another experiment result of the foregoing video comparison experiment. FIG. 11(a) and FIG. 11(b) show numbers of encoded bytes of slices in a plurality of video frames. The experiment result of FIG. 11(a) and FIG. 11(b) is obtained by using, for the video frames in the same experiment video in FIG. 10(a) and FIG. 10(b), the video encoding method including the conventional even and fixed slicing solution and the video encoding method including the dynamic slicing solution in this application.

As shown in FIG. 11(a), when the conventional even and fixed slicing solution is used, numbers of encoded bytes of four slices are unbalanced, numbers of encoded bytes of a slice #D are far less than numbers of encoded bytes of a slice #A and a slice #B, and numbers of encoded bytes of the slice #A change or fluctuate dramatically. As shown in FIG. 11(b), when the dynamic slicing solution in this application is used, numbers of encoded bytes of a slice #A to a slice #C are mainly concentrated in 2000 bytes to 4000 bytes, numbers of encoded bytes of a slice D are mainly concentrated in 1000 bytes to 2000 bytes, and a change degree of numbers of encoded bytes of the slice #A gradually decreases except for some fluctuation values. Therefore, in the dynamic slicing solution in this application, the numbers of encoded bytes of the slices are balanced.

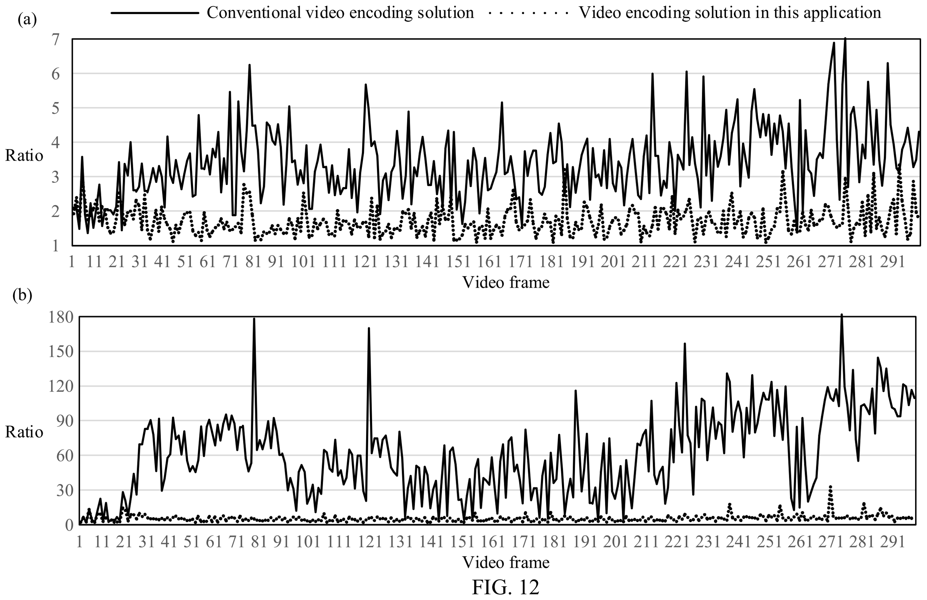

FIG. 12 is a diagram of another experiment result of the foregoing video comparison experiment. FIG. 12 shows ratios of largest encoding delays to smallest encoding delays of slices in video frames in an experiment video and ratios of largest numbers of encoded bytes to smallest numbers of encoded bytes.

As shown in (a) in FIG. 12, when the conventional even and fixed slicing solution is used, a largest value of the ratios of the largest encoding delays to the smallest encoding delays is about 7, and an average value is about 3.4. When the dynamic slicing solution in this application is used, the ratios of the largest encoding delays to the smallest encoding delays of the video frames are mostly between 1 and 2, a largest value of the ratios is about 3, and an average value is 1.7. Therefore, it can be learned that when the solution in this application is used, both the largest value and the average value of the ratios of the largest encoding delays to the smallest encoding delays are halved.

As shown in (b) in FIG. 12, when the conventional even and fixed slicing solution is used, a largest value of the ratios of the largest numbers of encoded bytes to the smallest numbers of encoded bytes is about 180, and an average value is about 60. When the dynamic slicing solution in this application is used, the ratios of the largest numbers of encoded bytes to the smallest numbers of encoded bytes of the video frames are mostly between 5 and 10, and a largest value of the ratios is about 30. Therefore, it can be learned that when the solution in this application is used, the ratios of the largest numbers of encoded bytes to the smallest numbers of encoded bytes decrease more significantly, in other words, numbers of encoded bytes of slices in a same video frame are distributed more evenly.

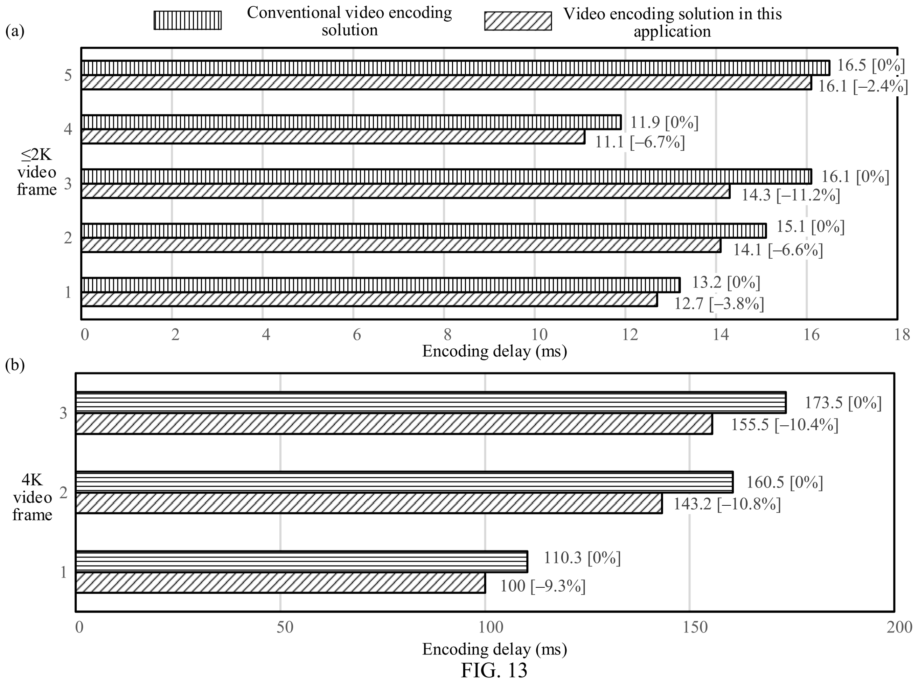

FIG. 13 is a diagram of an experiment result of another video comparison experiment. In the video comparison experiment, total encoding delays (in other words, sums of encoding delays of all video frames) of a plurality of videos whose resolutions are less than 2K and total encoding delays of a plurality of videos whose resolutions are 4K are separately compared. As shown in (a) in FIG. 13, in comparison with a conventional video encoding method, when a video encoding method in this application is used, total encoding delays of five videos whose resolutions are less than 2K are reduced by a maximum of 11.2% and a minimum of 2.4%. As shown in (b) in FIG. 13, when a solution in this application is used, total encoding delays of three videos whose resolutions are 4K are reduced by a maximum of 10.8% and a minimum of 9.3%. Therefore, it can be learned that the technical solutions in this application can significantly reduce a total encoding delay of a video.

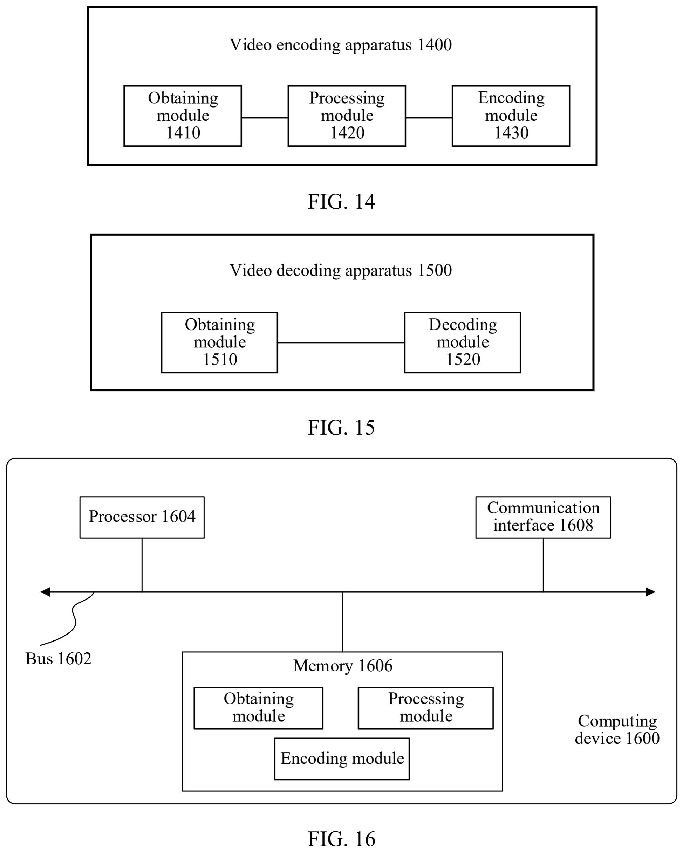

The foregoing describes the video encoding/decoding methods according to embodiments of this application. The following describes apparatuses and devices according to embodiments of this application with reference to FIG. 14 to FIG. 18.

FIG. 14 is an example diagram of a structure of a video encoding apparatus 1400 according to an embodiment of this application. The video encoding apparatus 1400 includes an obtaining module 1410, a processing module 1420, and an encoding module 1430.

The obtaining module 1410 is configured to: obtain a first slicing solution of a first video frame, and perform step 410 shown in FIG. 4.

The processing module 1420 is configured to: determine encoding performance prediction values of N second slices obtained when the first slicing solution is used for a second video frame, and determine a second slicing solution of the second video frame based on the encoding performance prediction values of the N second slices.

The encoding module 1430 is configured to: segment the second video frame into N third slices according to the second slicing solution, and separately encode the N third slices.

FIG. 15 is an example diagram of a structure of a video decoding apparatus 1500 according to an embodiment of this application. The video decoding apparatus 1500 includes an obtaining module 1510 and a decoding module 1520.

The obtaining module 1510 is configured to obtain an encoded second video frame, where the second video frame includes N encoded third slices.

The decoding module 1520 is configured to: decode the N encoded third slices to obtain N video frame slices, and splice the N video frame slices to obtain a decoded second video frame.

The foregoing modules may be implemented by software or hardware. For example, the following uses the processing module 1420 as an example to describe an implementation of the processing module 1420. Similarly, for implementations of the obtaining modules 1410 and 1510, the decoding module 1520, and the encoding module 1430, refer to an implementation of the processing module 1420.

The module is used as an example of a software functional unit, and the processing module 1420 may include code running on a computing instance. The computing instance may include at least one of a physical host (a computing device), a virtual machine, and a container. Further, there may be one or more computing instances. For example, the processing module 1420 may include code running on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the processing module 1420 may include at least one computing device, for example, a server. Alternatively, the processing module 1420 may be a device implemented by an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the processing module 1420 may be distributed in a same region, or may be distributed in different regions. The plurality of computing devices included in the processing module 1420 may be distributed in a same AZ, or may be distributed in different AZs. Similarly, the plurality of computing devices included in the processing module 1420 may be distributed in a same VPC, or may be distributed in a plurality of VPCs. The plurality of computing devices included in the processing module 1420 may be any combination of computing devices such as a server, an ASIC, a PLD, a CPLD, an FPGA, and a GAL.

This application further provides a computing device 1600. As shown in FIG. 16, the computing device 1600 includes a bus 1602, a processor 1604, a memory 1606, and a communication interface 1608. The processor 1604, the memory 1606, and the communication interface 1608 communicate with each other through the bus 1602. The computing device 1600 may be a server or a terminal device. It should be understood that numbers of processors and memories in the computing device 1600 are not limited in this application.

The bus 1602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 16 for representation, but it does not mean that there is only one bus or one type of bus. The bus 1602 may include a path for information transfer between the components (for example, the memory 1606, the processor 1604, and the communication interface 1608) of the computing device 1600.

The processor 1604 may include any one or more of a central processing unit (central processing unit, CPU), a graphics processing unit (graphics processing unit, GPU), a microprocessor (microprocessor, MP), a digital signal processor (digital signal processor, DSP), or another processor.

The memory 1606 may include a volatile memory (volatile memory), for example, a random access memory (random access memory, RAM). Alternatively, the memory 1606 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 1606 stores executable program code. The processor 1604 executes the executable program code to separately implement functions of the obtaining module 1410, the obtaining module 1510, the processing module 1420, the decoding module 1520, and the encoding module 1430, to implement the foregoing video encoding method. In other words, the memory 1606 stores instructions for performing the video encoding method.

The communication interface 1608 uses a transceiver module, for example, but not limited to, a network interface card or a transceiver, to implement communication between the computing device 1600 and another device or a communication network.

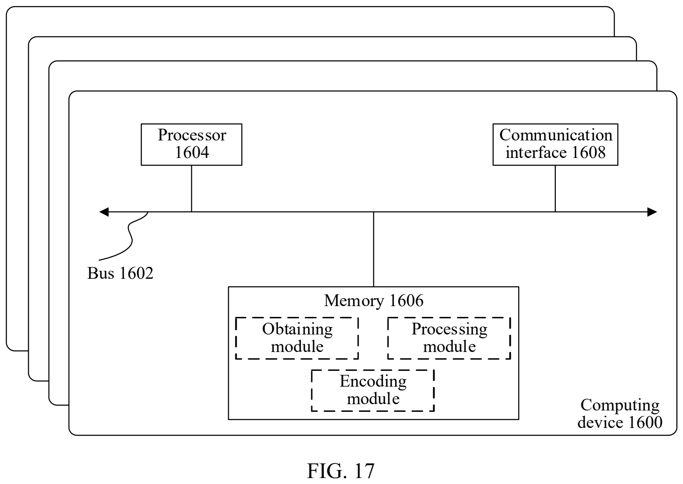

An embodiment of this application further provides a computing device cluster as shown in FIG. 17. The computing device cluster includes at least two computing devices. The computing device may be a server, for example, a central server, an edge server, or a local server in a local data center. In some embodiments, the computing device may alternatively be a terminal device like a desktop computer, a notebook computer, or a smartphone.

As shown in FIG. 17, the computing device cluster includes at least two computing devices 1600. Memories 1606 in a plurality of computing devices 1600 in the computing device cluster may store same instructions for performing the foregoing video encoding method or video decoding method.

In some possible implementations, alternatively, memories 1606 in a plurality of computing devices 1600 in the computing device cluster each may store a part of instructions for performing the video encoding method. In other words, a combination of one or more computing devices 1600 may jointly execute the instructions for performing the video encoding method.

It should be noted that memories 1606 in different computing devices 1600 in the computing device cluster may store different instructions, and the different instructions are separately used to perform some functions of the foregoing apparatus. In other words, instructions stored in memories 1606 in different computing devices 1600 may implement functions of one or more modules in an obtaining module, a processing module, and an encoding module.

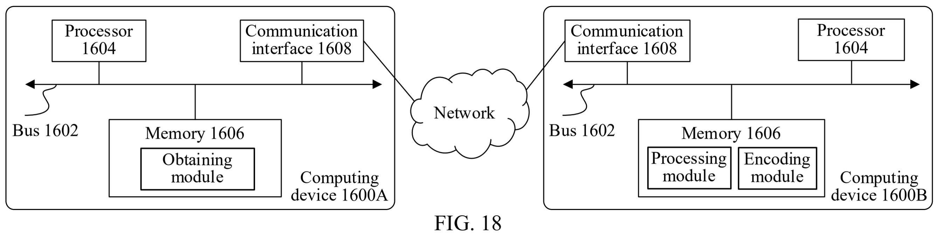

In some possible implementations, a plurality of computing devices in the computing device cluster may be connected over a network. The network may be a wide area network, a local area network, or the like. FIG. 18 shows a possible implementation. As shown in FIG. 18, two computing devices 1600A and 1600B are connected over a network, specifically, are connected to the network through a communication interface in each computing device. In this type of possible implementation, a memory 1606 in the computing device 1600A stores instructions for performing a function of the obtaining module. In addition, a memory 1606 in the computing device 1600B stores instructions for executing functions of the processing module and the encoding module.

It should be understood that functions of the computing device 1600A shown in FIG. 18 may alternatively be completed by a plurality of computing devices 1600. Similarly, functions of the computing device 1600B may alternatively be completed by a plurality of computing devices 1600.

An embodiment of this application further provides a chip. The chip includes a processor and a data interface. The processor reads, through the data interface, instructions stored in a memory, to perform the foregoing video encoding method.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the foregoing video encoding method.

An embodiment of this application further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing video encoding method.

The technical features in the foregoing embodiments may be combined in any manner. For brevity of description, not all possible combinations of the technical features in the foregoing embodiments are described. However, provided that the combinations of the technical features do not conflict with each other, it should be considered as the scope recorded in this specification.

The foregoing embodiments are merely intended to describe the technical solutions in this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments according to this application, it should be understood that the disclosed system, apparatus, and method may be implemented in another manner. For example, the described apparatus embodiments are merely examples. For example, division into the modules is merely logical function division. There may be another division manner during actual implementation. For example, a plurality of modules or components may be combined or integrated into another system, or some features may be ignored or not performed. In addition, the displayed or discussed mutual couplings, direct couplings, or communication connections may be implemented through some interfaces. The indirect couplings or communication connections between the apparatuses or modules may be implemented in electronic, mechanical, or other forms.

Modules described as separate components may or may not be physically separate, and components displayed as modules may or may not be physical modules, to be specific, may be located at one position, or may be distributed on a plurality of network modules. Some or all the modules may be selected according to actual needs to achieve the objectives of the solutions in embodiments.

In addition, functional modules in embodiments of this application may be integrated into one processing module, each of the modules may exist alone physically, or two or more modules are integrated into one module.

When functions are implemented in a form of a software functional unit and sold or used as an independent product, the functions may be stored in a computer-readable storage medium. Based on such an understanding, the technical solutions in this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A video encoding method, wherein the method comprises:

obtaining a first slicing solution of a first video frame, wherein the first slicing solution is used to segment the first video frame into N first slices, and N is a positive integer greater than or equal to 2;

determining encoding performance prediction values of N second slices obtained when the first slicing solution is used for a second video frame, wherein the N second slices are in one-to-one correspondence with the N first slices, a position of each second slice in the second video frame is the same as a position of a corresponding first slice in the first video frame, and an area of each second slice is the same as an area of the corresponding first slice;

determining a second slicing solution of the second video frame based on the encoding performance prediction values of the N second slices, wherein the second slicing solution is used to segment the second video frame into N third slices;

segmenting the second video frame into the N third slices according to the second slicing solution; and

separately encoding the N third slices to obtain an encoded second video frame.

2.   The method according to claim 1, wherein the determining the second slicing solution of the second video frame based on the encoding performance prediction values of the N second slices comprises:

adjusting an area of a part or all of the N second slices based on the encoding performance prediction values of the N second slices, to obtain the second slicing solution.

3.   The method according to claim 2, wherein the adjusting the area of the part or all of the N second slices comprises:

determining a fourth slice from the N second slices, wherein when the encoding performance prediction value is positively correlated with encoding performance, an encoding performance prediction value of the fourth slice is the smallest; or when the encoding performance prediction value is negatively correlated with encoding performance, an encoding performance prediction value of the fourth slice is the largest; and

reducing an area of the fourth slice.

4.   The method according to claim 3, wherein the reducing the area of the fourth slice comprises:

moving a slice boundary between the fourth slice and at least one adjacent second slice by K slice rows toward the fourth slice, wherein K is a positive integer.

5.   The method according to claim 3, wherein the method further comprises:

determining a fifth slice from the N second slices, wherein when the encoding performance prediction value is positively correlated with the encoding performance, an encoding performance prediction value of the fifth slice is the largest; or when the encoding performance prediction value is negatively correlated with the encoding performance, an encoding performance prediction value of the fifth slice is the smallest; and

the reducing the area of the fourth slice comprises:

moving one or more slice boundaries between the fourth slice and the fifth slice by K slice rows toward the fourth slice, wherein K is a positive integer.

6.   The method according to claim 4 or 5, wherein a value of K is 1.

7.   The method according to claim 4 or 5, wherein a value of K is positively correlated with a difference between a largest value and a smallest value in the encoding performance prediction values of the N second slices.

8.   The method according to any one of claims 2 to 7, wherein before determining the second slicing solution of the second video frame, the method further comprises:

determining that the difference between the largest value and the smallest value in the encoding performance prediction values of the N second slices reaches a target difference threshold.

9.   The method according to any one of claims 1 to 8, wherein the determining the encoding performance prediction values of the N second slices obtained when the first slicing solution is used for the second video frame comprises: determining, based on a target prediction model and an encoding parameter and/or a value of encoding performance of an $i^{th}$ first slice in the N first slices, an encoding performance prediction value of an $i^{th}$ second slice in the N second slices that corresponds to the $i^{th}$ first slice, wherein i is a positive integer less than or equal to N.

10. The method according to claim 9, wherein the encoding performance prediction value is an encoding delay prediction value, the target prediction model is a target prediction formula, and the determining, based on the target prediction model and the encoding parameter and/or the value of the encoding performance of the $i^{th}$ first slice in the N first slices, the encoding performance prediction value of the $i^{th}$ second slice in the N second slices that corresponds to the $i^{th}$ first slice comprises:

obtaining a number of encoded bytes of the $i^{th}$ first slice and a number of macroblocks in the $i^{th}$ first slice; and determining, based on the target prediction formula, the number of encoded bytes of the $i^{th}$ first slice, and the number of macroblocks in the $i^{th}$ first slice, an encoding delay prediction value of the $i^{th}$ second slice corresponding to the $i^{th}$ first slice.

11. A video encoding apparatus, wherein the apparatus comprises:

an obtaining module, configured to obtain a first slicing solution of a first video frame, wherein the first slicing solution is used to segment the first video frame into N first slices, and N is a positive integer greater than or equal to 2;
a processing module, configured to: determine encoding performance prediction values of N second slices obtained when the first slicing solution is used for a second video frame, wherein the N second slices are in one-to-one correspondence with the N first slices, a position of each second slice in the second video frame is the same as a position of a corresponding first slice in the first video frame, and an area of each second slice is the same as an area of the corresponding first slice; and determine a second slicing solution of the second video frame based on the first slicing solution and the encoding performance prediction values of the N second slices, wherein the second slicing solution is used to segment the second video frame into N third slices; and
an encoding module, configured to: segment the second video frame into the N third slices according to the second slicing solution, and separately encode the N third slices to obtain an encoded second video frame.

12. The apparatus according to claim 11, wherein the processing module is specifically configured to adjust an area of a part or all of the N second slices based on the encoding performance prediction values of the N second slices, to obtain the second slicing solution.

13. The apparatus according to claim 12, wherein the processing module is specifically configured to:

determine a fourth slice from the N second slices, wherein when the encoding performance prediction value is positively correlated with encoding performance, an encoding performance prediction value of the fourth slice is the smallest; or when the encoding performance prediction value is negatively correlated with encoding performance, an encoding performance prediction value of the fourth slice is the largest; and
reduce an area of the fourth slice.

14. The apparatus according to claim 13, wherein the processing module is specifically configured to: move a slice boundary between the fourth slice and at least one adjacent second slice by K slice rows toward the fourth slice.

15. The apparatus according to claim 13, wherein the processing module is further configured to:

determine a fifth slice from the N second slices, wherein when the encoding performance prediction value is positively correlated with the encoding performance, an encoding performance prediction value of the fifth slice is the largest; or when the encoding performance prediction value is negatively correlated with the encoding performance, an encoding performance prediction value of the fifth slice is the smallest; and
the processing module is specifically configured to:
move one or more slice boundaries between the fourth slice and the fifth slice by K slice rows toward the fourth slice.

16. The apparatus according to claim 14 or 15, wherein a value of K is 1.

**17.** The apparatus according to claim 14 or 15, wherein a value of K is positively correlated with a difference between a largest value and a smallest value in the encoding performance prediction values of the N second slices.

**18.** The apparatus according to any one of claims 12 to 17, wherein before determining the second slicing solution of the second video frame, the processing module is further configured to:
determine that the difference between the largest value and the smallest value in the encoding performance prediction values of the N second slices reaches a target difference threshold.

**19.** The apparatus according to any one of claims 11 to 18, wherein the processing module is specifically configured to: determine, based on a target prediction model and an encoding parameter and/or a value of encoding performance of an $i^{th}$ first slice in the N first slices, an encoding performance prediction value of an $i^{th}$ second slice in the N second slices that corresponds to the $i^{th}$ first slice, wherein i is a positive integer less than or equal to N.

**20.** The apparatus according to claim 19, wherein the encoding performance prediction value is an encoding delay prediction value, the target prediction model is a target prediction formula, and the processing module is specifically configured to:

obtain a number of encoded bytes of the $i^{th}$ first slice and a number of macroblocks in the $i^{th}$ first slice; and determine, based on the target prediction formula, the number of encoded bytes of the $i^{th}$ first slice, and the number of macroblocks in the $i^{th}$ first slice, an encoding delay prediction value of the $i^{th}$ second slice corresponding to the $i^{th}$ first slice.

**21.** A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 10.

**22.** A computer program product comprising instructions, wherein when the instructions are run by a computing device cluster, the computing device cluster is enabled to perform the method according to any one of claims 1 to 10.

**23.** A computer-readable storage medium, comprising computer program instructions, wherein when the computer program instructions are executed by a computing device cluster, the computing device cluster is enabled to perform the method according to any one of claims 1 to 10.

Collection end 110

| Collection unit 130 | → | Encoding unit 140 | → | Transmission unit 150 |

Play end 120

| Display unit 180 | ← | Decoding unit 170 | ← | Stream Caching unit 160 |

FIG. 1

Sequence

Frame

Slice

Macroblock

Pixel

FIG. 2

(a)

R0
R1
R2
R3
R4
R5
R6
R7
R8
R9
R10
R11
R12
R13
R14
R15

$t_1$

(b)

R0
R1
R2
R3
R4
R5
R6
R7
R8
R9
R10
R11
R12
R13
R14
R15

$t_2$

FIG. 3

400

| Obtain a first slicing solution of a first video frame | 410 |

| Determine encoding performance prediction values of N second slices obtained when the first slicing solution is used for a second video frame | 420 |

| Determine a second slicing solution of the second video frame based on the encoding performance prediction values of the N second slices | 430 |

| Segment the second video frame into N third slices according to the second slicing solution, and separately encode the N third slices | 440 |

FIG. 4

500

| Obtain an encoded second video frame | 510 |

| Decode N encoded third slices in the second video frame to obtain N video frame slices | 520 |

| Splice the N video frame slices to obtain a decoded second video frame | 530 |

FIG. 5

A first slicing solution is used for a first video frame

FIG. 6(a)

A first slicing solution is used for a second video frame

R0

R1

R2

R3

Second slice #1

R4

R5

R6

Second slice #2

R7

...

R(4N–4)

R(4N–3)

R(4N–2)

R(4N–1)

Second slice #N

$t_N$     $t_1$     $t_2$

FIG. 6(b)

A second slicing solution is used for a second video frame

FIG. 6(c)

A third slicing solution is used for a third video frame

| | |
|---|---|
| R0 | |
| R1 | |
| R2 | Fourth slice #1 |
| R3 | |
| R4 | Fourth slice #2 |
| R5 | |
| R6 | Fourth slice #3 |
| R7 | |
| ... | |
| R(4N–6) | |
| R(4N–5) | |
| R(4N–4) | |
| R(4N–3) | |
| R(4N–2) | |
| R(4N–1) | Fourth slice #N |

FIG. 6(d)

720P  $y=40.439\ln(x)-12.001$

4K  $y=87.414\ln(x)-181.85$

FIG. 7

Start slicing

Is a frame a key frame? — Yes →

No ↓

Is encoding performance of N second slices balanced? — Yes →

No ↓

Traverse the N second slices

Reuse a first slice solution

Is encoding performance the worst? — Yes → Reduce an area of a second slice

Is encoding performance the optimal? — Yes → Increase an area of a second slice

Is encoding performance moderate? — Yes → Keep an area of a second slice unchanged

Determine a second slicing solution

FIG. 8

EP 4 716 213 A1

(a) Video frame A

Slice #A

Slice boundary AB

Slice #B

Slice #C

Slice #D

(b) Video frame B

Slice #A

Slice boundary AB

Slice #B

Slice boundary BC

Slice #C

Slice boundary CD

Slice #D

(d) Video frame D

Slice #A

Slice boundary AB

Slice #B

Slice boundary BC

Slice #C

Slice boundary CD

Slice #D

(c) Video frame C

Slice #A

Slice boundary AB

Slice #B

Slice boundary BC

Slice #C

Slice boundary CD

Slice #D

FIG. 9

FIG. 10(a)

FIG. 10(b)

FIG. 11(a)

FIG. 11(b)

FIG. 12

FIG. 13

Video encoding apparatus 1400

| Obtaining module 1410 | Processing module 1420 | Encoding module 1430 |

FIG. 14

Video decoding apparatus 1500

| Obtaining module 1510 | Decoding module 1520 |

FIG. 15

Processor 1604

Communication interface 1608

Bus 1602

Memory 1606

Obtaining module

Processing module

Encoding module

Computing device 1600

FIG. 16

FIG. 17

FIG. 18

## INTERNATIONAL SEARCH REPORT

| International application No. |
| --- |
| **PCT/CN2023/138765** |

### A.   CLASSIFICATION OF SUBJECT MATTER

H04N19/119(2014.01)i;  H04N19/174(2014.01)i

According to International Patent Classification (IPC) or to both national classification and IPC

### B.   FIELDS SEARCHED

Minimum documentation searched (classification system followed by classification symbols)

IPC:  H04N

Documentation searched other than minimum documentation to the extent that such documents are included in the fields searched

Electronic data base consulted during the international search (name of data base and, where practicable, search terms used)

CNTXT, CNABS, WPABS, DWPI, ENTXT, IEEE, CNKI: 切片, 条带, 分割, 划分, 面积, 方案, 方式, 规则, 性能, 帧, 确定, slice, partition, segment, divide, proportion, area, scheme, mode, regulation, rule, performance, frame, determine

### C.   DOCUMENTS CONSIDERED TO BE RELEVANT

| Category* | Citation of document, with indication, where appropriate, of the relevant passages | Relevant to claim No. |
| --- | --- | --- |
| A | CN 115883836 A (BEIJING RONGXUN KECHUANG TECHNOLOGY CO., LTD.) 31 March 2023 (2023-03-31) description, paragraphs 0030-0066 and 0082-0114 | 1-23 |
| A | JP 2012110054 A (CANON K. K.) 07 June 2012 (2012-06-07) entire document | 1-23 |
| A | CN 115299046 A (HFI INNOVATION INC.) 04 November 2022 (2022-11-04) entire document | 1-23 |
| A | CN 110430434 A (AGORA LAB INC.) 08 November 2019 (2019-11-08) entire document | 1-23 |
| A | CN 111263154 A (TENCENT TECHNOLOGY (SHENZHEN) CO., LTD.) 09 June 2020 (2020-06-09) entire document | 1-23 |
| A | WO 2023061334 A1 (BEIJING BYTEDANCE NETWORK TECHNOLOGY CO., LTD. et al.) 20 April 2023 (2023-04-20) entire document | 1-23 |

☐ Further documents are listed in the continuation of Box C.     ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 February 2024** | **22 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138765**

| Patent document cited in search report | | | Publication date (day/month/year) | Patent family member(s) | | | Publication date (day/month/year) |
|---|---|---|---|---|---|---|---|
| CN | 115883836 | A | 31 March 2023 | None | | | |
| JP | 2012110054 | A | 07 June 2012 | JP | 5389205 | B2 | 15 January 2014 |
| | | | | US | 2007253490 | A1 | 01 November 2007 |
| | | | | US | 8179973 | B2 | 15 May 2012 |
| | | | | JP | 2007318726 | A | 06 December 2007 |
| | | | | JP | 5002286 | B2 | 15 August 2012 |
| CN | 115299046 | A | 04 November 2022 | TW | 202139717 | A | 16 October 2021 |
| | | | | TWI | 761166 | B | 11 April 2022 |
| | | | | EP | 4128767 | A1 | 08 February 2023 |
| | | | | US | 2023119121 | A1 | 20 April 2023 |
| | | | | WO | 2021197433 | A1 | 07 October 2021 |
| CN | 110430434 | A | 08 November 2019 | US | 2019342567 | A1 | 07 November 2019 |
| | | | | US | 10567781 | B2 | 18 February 2020 |
| | | | | EP | 3565246 | A1 | 06 November 2019 |
| | | | | EP | 3565246 | B1 | 17 March 2021 |
| CN | 111263154 | A | 09 June 2020 | US | 2022232222 | A1 | 21 July 2022 |
| | | | | WO | 2021147448 | A1 | 29 July 2021 |
| WO | 2023061334 | A1 | 20 April 2023 | None | | | |

Form PCT/ISA/210 (patent family annex) (July 2022)

**REFERENCES CITED IN THE DESCRIPTION**

**Patent documents cited in the description**

- RU 2023115400